(19) Europäisches Patentamt
European Patent Office
Office européen des brevets

(11) **EP 2 774 196 B1**

## (12) FASCICULE DE BREVET EUROPEEN

(45) Date de publication et mention
de la délivrance du brevet:
**11.10.2017 Bulletin 2017/41**

(21) Numéro de dépôt: **12794415.5**

(22) Date de dépôt: **30.10.2012**

(51) Int Cl.:
*H01M 4/04* $^{(2006.01)}$  *H01M 10/0525* $^{(2010.01)}$
*C25D 13/02* $^{(2006.01)}$  *C25D 9/04* $^{(2006.01)}$
*H01M 4/1391* $^{(2010.01)}$  *C25D 5/10* $^{(2006.01)}$
*C25D 13/22* $^{(2006.01)}$  *C25D 15/00* $^{(2006.01)}$
*H01M 4/139* $^{(2010.01)}$  *H01M 4/66* $^{(2006.01)}$
*H01M 10/0585* $^{(2010.01)}$  *C25D 5/50* $^{(2006.01)}$
*H01M 4/485* $^{(2010.01)}$  *H01M 10/0562* $^{(2010.01)}$

(86) Numéro de dépôt international:
**PCT/FR2012/052514**

(87) Numéro de publication internationale:
**WO 2013/064779 (10.05.2013 Gazette 2013/19)**

(54) **PROCEDE DE FABRICATION DE BATTERIES EN COUCHES MINCES ENTIEREMENT SOLIDES**

VERFAHREN ZUR HERSTELLUNG VON FESTKÖRPER- DÜNNSCHICHTBATTERIEN

METHOD FOR MANUFACTURING ALL-SOLID-STATE THIN-FILM BATTERIES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.11.2011 FR 1159886**

(43) Date de publication de la demande:
**10.09.2014 Bulletin 2014/37**

(73) Titulaire: **I-TEN**
**69410 Champagne-au-Mont-d'Or (FR)**

(72) Inventeurs:
• **BOUYER, Frédéric**
**21160 Perrigny Les Dijon (FR)**
• **VUILLEMIN, Bruno**
**39230 Darbonnay (FR)**
• **GABEN, Fabien**
**69130 Ecully (FR)**

(74) Mandataire: **Schmidt, Martin Peter**
**IXAS Conseil**
**15, rue Emile Zola**
**69002 Lyon (FR)**

(56) Documents cités:
**WO-A1-2008/089110    JP-A- 2002 042 790
JP-A- 2002 042 792    US-B1- 6 607 645
US-B2- 7 662 265**

• **FERRARI ET AL: "EPD of thick films for their
application in lithium batteries", JOURNAL OF
THE EUROPEAN CERAMIC SOCIETY, ELSEVIER
SCIENCE PUBLISHERS, BARKING, ESSEX, GB,
vol. 27, no. 13-15, 1 janvier 2007 (2007-01-01),
pages 3823-3827, XP022143643, ISSN: 0955-2219,
DOI: 10.1016/J.JEURCERAMSOC.2007.02.051**

**Description**

**Domaine de l'invention**

La présente invention appartient au domaine des batteries et notamment des batteries à ions de lithium. Elle concerne plus particulièrement les batteries à ions de lithium entièrement solides, et un nouveau procédé de fabrication de telles batteries en couches minces.

**État de la technique**

La batterie idéale pour l'alimentation des dispositifs électriques autonomes (tels que : téléphone et ordinateurs portables, outils portatifs, capteurs autonomes) ou bien pour la traction des véhicules électriques présenterait une durée de vie élevée, serait capable de stocker à la fois de grandes quantités d'énergie et de puissance, et ne présenterait pas de risque de surchauffe voire d'explosion.

Actuellement ces dispositifs électriques sont alimentés essentiellement par des batteries à ions de lithium (appelées ici « batteries Li-ion »), qui présentent la meilleure densité d'énergie parmi les différentes technologies de stockage proposées. Cependant, il existe différentes architectures et compositions chimiques d'électrodes permettant de réaliser des batteries Li-ion.

Les modes de fabrication des batteries Li-ion sont présentés dans de nombreux articles et brevets, et l'ouvrage « Advances in Lithium-Ion Batteries » (ed. W. van Schalkwijk et B. Scrosati), paru en 2002 (Kluever Academic / Plenum Publishers) en donne un bon état des lieux. Les électrodes des batteries Li-ion peuvent être fabriquées à l'aide de techniques d'impression (notamment : roll coating, doctor blade, tape casting). Ces techniques permettent de réaliser des dépôts d'épaisseurs comprises entre 50 et 400 $\mu$m. En fonction de l'épaisseur des dépôts, de leurs porosités et de la taille des particules actives, la puissance et énergie de la batterie peuvent être modulées. Les encres (ou pâtes) déposées pour former les électrodes contiennent des particules de matériaux actifs, mais également des liants (organiques), de la poudre de carbone permettant d'assurer le contact électrique entre les particules, et des solvants qui sont évaporés lors de l'étape de séchage des électrodes. Pour améliorer la qualité des contacts électriques entre les particules et compacter les dépôts, une étape de calandrage est réalisée sur les électrodes. Après cette étape de compression, les particules actives des électrodes occupent environ 60% du volume du dépôt, ce qui signifie qu'il reste généralement 40% de porosités entre les particules. Les porosités sont remplies par un électrolyte.

Ces batteries comportent en outre un séparateur placé entre l'anode et la cathode.

Le séparateur est un film polymère poreux d'environ 20 $\mu$m d'épaisseur. C'est durant l'assemblage final de la batterie, lorsque l'anode et la cathode vont être empilées ou enroulées avec le séparateur entre elles que l'électrolyte sera ajouté. L'électrolyte migre à la fois dans les porosités contenues dans le séparateur et dans les électrodes et assure ainsi la conduction ionique entre les électrodes. Il peut être liquide (solvant aprotique dans lequel un sel de lithium est dissous) ou sous forme de gel plus ou moins polymérisé imprégné d'un sel de lithium. Les liants utilisés dans la formulation des encres contribuent également au transport des ions lithium. Ils sont imprégnés d'électrolyte qui peut être soit un solvant organique aprotique contenant un sel de lithium ou bien un liquide ionique.

En fonction de l'épaisseur des dépôts, des tailles et densité de particules actives contenues dans l'encre, les puissances et énergies de la batterie peuvent être modulées. L'augmentation des densités d'énergie se fait nécessairement au détriment de la densité de puissance. Les cellules batterie de fortes puissances nécessitent d'utiliser des électrodes et séparateurs de faibles épaisseurs et très poreux, alors que l'accroissement de la densité d'énergie demande au contraire d'accroitre ces mêmes épaisseurs et de réduire le taux de porosité. L'article "Optimization of Porosity and Thickness of a Battery Electrode by Means of a Reaction-Zone Model" par John Newman, paru dans J. Electrochem. Soc., Vol. 142, No.1 en janvier 1995, démontre les effets respectifs des épaisseurs d'électrodes et de leur porosité sur leur régime de décharge (puissance) et densité d'énergie.

Cependant l'augmentation de la porosité tend à accroitre les risques de courts-circuits internes à la cellule batterie. Du lithium métallique étant susceptible de précipiter dans les pores. De la même manière, des particules d'électrodes de trop faible dimension pourraient se détacher de l'électrode et migrer dans ces pores.

De plus, les électrolytes à base de solvants organiques et sels de lithium tendent à se dégrader (s'oxyder) sous l'effet de potentiels électriques élevés et/ou températures, traces d'humidité trop élevées. Cette dégradation peut être lente et continue lors de l'exposition de la cellule batterie à un environnement externe tempéré (vieillissement), mais elle peut aussi devenir rapide et brutale en cas de surchauffe, ou surcharge. L'évaporation et la combustion de cet électrolyte peuvent alors amorcer une réaction violente pouvant conduire à l'explosion de la cellule.

Afin de réduire ces risques, des films polymères denses conducteurs des ions lithium peuvent être utilisés comme séparateurs. Ces films sont également plus résistifs et leur faible conductivité ionique doit être compensée par une faible épaisseur pour ne pas trop dégrader les performances de la batterie. Les techniques actuelles de fabrication des films polymères, ainsi que leurs mauvaises propriétés mécaniques, ne permettent pas d'avoir des épaisseurs

inférieures à 30 μm à 40 μm. Ceci est décrit par exemple dans la demande de brevet WO 2004/051769 (Avestor Ltd Parnetship). Pour améliorer les propriétés mécaniques des films polymères, des particules de céramiques éventuellement conductrices des ions lithium, ont été ajoutées ainsi que cela est décrit dans la demande de brevet EP 1 049 188 A1 (Ohara KK). Cependant les épaisseurs des films obtenus restent proches de 20 μm. Pour réduire encore ces épaisseurs de films, la demande de brevet EP 1 424 743 A1 (Ohara KK) décrit le dépôt d'un film d'électrolyte directement sur la surface des électrodes. Parmi les méthodes décrites, l'une consiste à enduire la surface de l'électrode d'une encre contenant un électrolyte polymère et des particules d'électrolyte solide inorganique, conducteur des ions lithium.

De plus, les films polymères obtenus par ces techniques ne recouvrent que les surfaces des électrodes, les bords d'électrodes restant nus. En fonction des contraintes mécaniques, de la précision du positionnement de ces films, l'isolation diélectrique sur les bords des cellules n'est pas parfaite. Ceci peut donner naissance à de petits courants de fuites qui peuvent induire un phénomène d'autodécharge, voire un court-circuit interne à la cellule.

D'autre part, l'utilisation d'électrolytes organiques contenant des sels de lithium limite le choix des matériaux d'électrodes pouvant être utilisés, la plupart d'entre eux réagissant aux potentiels fortement réducteur ou oxydant des anodes et cathodes.

Un autre mode de réalisation de films d'électrolyte et d'électrodes a été proposé. Il s'agit de déposer par voie sous vide un film mince de céramiques ou vitro céramiques conductrices des ions lithium, et de matériaux d'électrode à insertion du lithium. Cette technique permet d'obtenir des films denses, sans porosités, ayant par conséquent d'excellentes propriétés mécaniques permettant d'éviter l'apparition de courts-circuits internes à la batterie. L'absence de porosités permet d'assurer le transport des ions lithium par diffusion à travers le film, sans avoir recours à l'utilisation d'électrolytes organiques à base de polymères ou solvant contenant des sels de lithium. De tels films peuvent recouvrir la totalité de l'électrode, y compris ses bords.

De tels films totalement inorganiques confèrent d'excellentes performances en vieillissement, sécurité et tenue en température.

D'autre part, la réalisation de films minces denses et de qualité, de composition chimique plus ou moins complexe, pouvant contenir plusieurs phases, présente de nombreux avantages, et ce, non seulement pour la fabrication des batteries Li-ion performantes, mais pour de nombreuses autres applications.

S'agissant des batteries, l'empilement successif de couches minces denses inorganiques permet d'accroître fortement les performances des batteries Li-ion.

Différentes techniques de dépôt sous vide ont été utilisées pour la fabrication de couches minces denses dans des batteries. En particulier, les dépôts par CVD (Chemical Vapor Deposition) sont utilisés pour la fabrication de films minces dans le domaine de l'électronique. Cette technique et toutes ses variantes (EVD, OMCVD) permettent d'obtenir des films de bonne qualité, très adhérents, mais la vitesse de dépôt est faible, de l'ordre de 1 μm/h à 10 μm/h, et les processus réactionnels peuvent nécessiter des températures élevées, pouvant être supérieures à 600°C et qui ne sont pas supportées par n'importe quel type de substrat. Par ailleurs, ces techniques imposent souvent l'utilisation de gaz pouvant être fortement corrosifs.

Les techniques de dépôt par voie physique présentent également des inconvénients. Les techniques de « thermal spray technology » sont plutôt adaptées à la fabrication de dépôts relativement épais, de plusieurs centaines de microns d'épaisseur, elles sont peu précises et ne permettent pas d'obtenir des films minces d'épaisseur parfaitement homogène et contrôlée. Les techniques de dépôts PVD (Physical Vapor Deposition) regroupent plusieurs variantes en fonction des modes de pulvérisation. La vaporisation des composés à déposer peut être réalisée par des excitations RF (radio fréquences), ou bien assistée par faisceau d'ions (IBAD). La vitesse de dépôt obtenue avec de telles technologies est de l'ordre de 0,1 μm à 1 μm par heure. Les techniques de dépôt PVD permettent d'obtenir des dépôts de très bonne qualité, ne contenant quasiment pas de défauts ponctuels, et permettent de réaliser des dépôts à des températures relativement faibles. Cependant, du fait de la différence de vitesse d'évaporation entre les différents éléments, il est difficile de déposer des alliages complexes avec de telles techniques, et de maîtriser la stoechiométrie du dépôt. Cette technique est parfaitement adaptée à la réalisation de couches minces, mais dès que l'on cherche à augmenter l'épaisseur de dépôt (a titre d'exemple des épaisseurs supérieures à 5 μm), des croissances colonnaires apparaissent, et le temps de dépôt devient trop important pour envisager une utilisation industrielle dans le domaine des microbatteries en couches minces.

Le dépôt par PVD est la technologie la plus utilisée actuellement pour la fabrication des microbatteries en couches minces. En effet, ces applications nécessitent des films exempts de porosité et d'autres défauts ponctuels pour garantir une faible résistivité électrique, et la bonne conduction ionique nécessaire au bon fonctionnement des dispositifs.

Cependant, les techniques de dépôt sous vide utilisées pour réaliser de tels films sont très couteuses et difficiles à mettre en oeuvre industriellement sur de larges surfaces, avec une productivité élevée.

Les autres technologies actuellement disponibles pour réaliser des couches minces, comprennent des modes de réalisation basés sur la densification de dépôts compacts de particules: Parmi ces techniques on peut citer la réalisation de dépôts par voie sol-gel. Cette technique consiste à déposer sur la surface d'un substrat un réseau polymérique obtenu après des étapes d'hydrolyse, polymérisation et condensation. La transition sol-gel apparait durant l'évaporation du solvant qui accélère les processus réactionnel en surface. Cette technique permet de réaliser des dépôts compacts de très faible épaisseur. Les films ainsi obtenus ont une épaisseur de l'ordre de la centaine de nanomètres. Pour accroître l'épaisseur du dépôt sans induire de risques d'apparition de fissures ou craquelures, il convient de procéder par étapes successives. De ce fait, cette technique pose des problèmes de productivité industrielle, dès lors que l'on cherche à augmenter l'épaisseur du dépôt.

Les techniques d'encrage décrites ci-dessus peuvent permettre de réaliser des dépôts minces. Cependant, pour obtenir des dépôts d'épaisseur comprise entre 1 et 5 micromètre, il est nécessaire de disposer d'une encre fluide. La fluidité des encres dépend de la teneur en extraits secs, des tailles de particules, de la nature du solvant et d'éventuels composés organiques dissous dans cette encre. Pour réaliser des dépôts en couches minces, il est nécessaire de réduire l'extrait sec, et de ne pas avoir des tailles de particules trop faibles (des tailles supérieures à la centaine de nanomètres). En revanche, cette augmentation de la quantité de solvant conduit à accroitre les risques de former des fissures, cavités et agglomérats dans le dépôt, pendant les phases de séchage. Les dépôts deviennent alors extrêmement difficiles à compacter. La compaction finale du dépôt est obtenue par évaporation du solvant contenu dans l'encre. Cette étape de séchage est difficile à maitriser car les régions de plus faibles densités, avec des porosités localement plus faibles, sécheront plus vite que les zones de plus fortes densités. Les effets capillaires induits par ces différences locales de niveau de séchage conduiront les zones de plus fortes densités, encore imprégnées, à se regrouper. La densification de ces dépôts ne peut être effectuée qu'à l'aide de compaction sous de très fortes pressions (d'autant plus élevées que la taille des particules sera faibles) et/ou de frittage à des températures élevées, proches de la température de fusion du matériau constituant les particules.

Il est nécessaire de chauffer à des températures très élevées pour arriver à densifier la structure initialement poreuse. Les paliers de montée en température sont délicats à maitriser si l'on veut que le retreint liée au comblement de toutes ces porosités dans l'épaisseur du dépôt ne donne pas lieu à des fissures. De plus, tous les substrats ne supportent pas de telles températures, de surcroît les techniques actuelles de dépôt en phase liquide décrites ci-dessus ne permettent pas de maîtriser précisément l'épaisseur de dépôt.

Il existe enfin une dernière alternative pour le dépôt de matériaux en couches minces dans des dispositifs électrochimiques et en particulier les batteries. Il s'agit du dépôt de particules par électrophorèse. Par exemple, le brevet US 7,662,265 (Massachusetts Institute of Technology) décrit la fabrication de dispositifs électrochimiques en couches minces (entre autres des piles) par électrophorèse, dans lequel une des électrodes (anode ou cathode) et l'électrolyte solide sont obtenus simultanément, l'autre électrode étant formée préalablement au dépôt électrophorétique. De nombreux matériaux de cathode sont mentionnés, en particulier $LiCoO_2$, et $LiFePO_4$, les électrolytes solides mentionnés sont des électrolytes polymères.

Le brevet US 6,887,361 (University of California) décrit un procédé pour former une membrane poreuse céramique sur un substrat de dispositif électrochimique à l'état solide. Le dépôt est réalisé par électrophorèse d'une suspension de particules de céramique dans de l'alcool isopropylique, suivi d'un séchage et d'un frittage. Le procédé est applicable essentiellement aux cellules à combustible à oxyde solide (SOFC).

Les demandes de brevet US 2007/184345, WO 2007/061928, US 2008/286651 et WO 2010/011569 (Infinite Power Solutions) décrivent des dispositifs électrochimiques comprenant une cathode déposée par des techniques autres qu'un dépôt sous vide ; elles décrivent notamment le dépôt d'une couche cathodique par électrophorèse à partir d'une poudre de taille micronique de $LiCoO_2$ ; cette couche comporte cependant des cavités, et elle doit être densifiée par un frittage à haute température, proche de la température de fusion du matériau déposé. Les autres parties de la batterie sont obtenues par dépôt sous vide.

Le brevet US 7,790,967 (3G Solar Ltd) décrit également le dépôt d'une électrode nanoporeuse en $TiO_2$ par électrophorèse à partir d'une suspension de nanoparticules de $TiO_2$ ; L'épaisseur de l'électrode est de l'ordre de 10 $\mu$m.

Certains documents décrivent l'utilisation de l'électrophorèse pour la réalisation de certaines parties de batteries en couches minces ; dans ces documents, l'électrophorèse conduit à des couches poreuses.

Le brevet JP 4501247 (DENSO) décrit un procédé de fabrication d'une électrode pour une batterie dans lequel une couche d'un matériau actif est formée par électrophorèse. Plus précisément, ce brevet décrit un procédé dans lequel un collecteur de charge est plongé dans une solution comprenant une matière active dans un solvant, ce procédé étant une partie d'un procédé plus général de fabrication d'une électrode pour batterie. L'électrophorèse de ladite matière active contenue dans la solution s'effectue en générant un gradient de potentiel électrique dans cette solution, la matière active formant une couche de matériau actif sur la surface du collecteur, et adhérant à ladite surface de collecteur. La fabrication de cathodes pour batteries Li-ion par ce procédé est mentionnée. Les techniques employées pour réaliser l'anode et l'électrolyte ne sont pas indiquées.

La demande de brevet JP 2002-042792 (DENSO) décrit un procédé de dépôt d'un électrolyte solide sur une électrode d'une batterie, le dépôt étant effectué par électrophorèse ; aucune densification n'est effectuée après le dépôt. Les électrolytes visés sont essentiellement les électrolytes polymères, ainsi que le iodure de lithium.

**Objets de l'invention**

Un premier but de la présente invention est la fabrication de batteries en couches minces entièrement solides dont les couches possèdent une grande précision géométrique, notamment une épaisseur contrôlée avec précision, et un très faible nombre de défauts, par un procédé assurant une vitesse de dépôt élevée et présentant un coût d'investissement et d'exploitation peu élevé.

Un autre but de l'invention est de fabriquer des batteries en couches minces par un procédé facile à mettre en oeuvre industriellement et peu polluant.

Encore un autre but de l'invention est de disposer d'un procédé permettant de réaliser très simplement des couches minces de compositions chimiques variées.

Un autre but est de fabriquer des batteries présentant à la fois une meilleure densité de puissance et une meilleure densité d'énergie.

Encore un autre but est de fabriquer des batteries à durée de vie améliorée pouvant résister à des expositions en températures élevées sans se détériorer.

Ces objectifs sont atteints grâce à un procédé de fabrication de batteries en couches minces entièrement solides, lesdites batteries comprenant une couche de matériaux d'anode (« couche d'anode »), une couche de matériaux d'électrolyte solide (« couche d'électrolyte ») et une couche de matériaux de cathode (« couche de cathode »), chacune de ces trois couches étant déposée par un procédé d'électrophorèse, sachant que la couche d'anode et la couche de cathode sont déposées chacune sur un substrat conducteur, de préférence une feuille ou bande mince métallique ou une feuille ou bande de plastique métallisée ou un film isolant métallisé, au moins un desdits substrats conducteurs pouvant servir comme collecteur de courant de la batterie, et la couche de matériau d'électrolyte solide est déposée sur la couche d'anode et/ou cathode, et sachant que ledit procédé comprend en outre au moins une étape d'empilage desdites feuilles ou bandes, de manière à former au moins une batterie de structure empilée « collecteur / anode / électrolyte / cathode / collecteur ». Avantageusement, ce procédé comprend en outre au moins une étape dite de densification pour augmenter la densité d'au moins une des couches déposées par électrophorèse, cette au moins une étape de densification pouvant être effectuée sur le substrat conducteur dotée d'au moins une couche d'anode ou d'au moins une couche de cathode, ladite au moins une couche d'anode ou de cathode pouvant éventuellement être revêtue d'au moins une couche d'électrolyte, et ladite au moins une étape de densification pouvant être effectuée avant empilage et/ou sur la structure empilée, ladite au moins une étape de densification comprenant une étape de compactage mécanique et/ou une étape de recuit à une température $T_R$ qui, de préférence, ne dépasse pas 0,7 fois la température de fusion ou de décomposition (exprimée en °C), et de préférence ne dépasse par 0,5 fois (et encore plus préférentiellement ne dépasse pas 0,3 fois) la température de fusion ou de décomposition du matériau d'anode, de cathode ou d'électrolyte le plus fusible soumis à ladite étape de recuit.

Plus particulièrement, ces objectifs sont atteints grâce à un procédé de fabrication de batteries en couches minces entièrement solides comprenant les étapes de :

(a) Approvisionnement d'une première suspension colloïdale « *SP+* » contenant des particules « *P+* » dite de « matériaux de cathode » ;

(b) Approvisionnement d'une deuxième suspension colloïdale « *SP-* » contenant des particules « *P-* » dite de « matériaux d'anode » ;

(c) Approvisionnement d'une troisième suspension colloïdale « *SPn* » de particules « *Pn* » dite de « matériaux d'électrolyte solide » conductrice ;

(d) Approvisionnement de substrats conducteurs, de préférence sous la forme d'une bande ou d'une feuille ;

(e) Immersion d'un premier substrat conducteur dans un bain de ladite suspension *SP+* contenant des matériaux de cathode en présence d'une contre-électrode, suivi de l'application d'une tension électrique entre ledit premier substrat conducteur et ladite contre-électrode de manière à obtenir un dépôt électrophorétique contenant des particules *P+* de matériaux de cathode sur ledit premier substrat de matériau conducteur ;

(f) Immersion d'un deuxième substrat conducteur dans un bain de ladite suspension *SP-*contenant des matériaux d'anode en présence d'une contre-électrode, suivi de l'application d'une tension électrique entre ledit deuxième substrat et ladite contre-électrode de manière à obtenir un dépôt électrophorétique contenant des particules *P-* de matériaux d'anode sur ledit substrat de matériau conducteur ;

(g) Immersion du premier substrat revêtu à l'étape (e) et/ou du deuxième substrat revêtu à l'étape (f) dans un bain de ladite suspension *SPn* de particules *Pn* de matériaux d'électrolyte solide en présence d'une contre-électrode, suivi de l'application d'une tension électrique entre ledit premier et/ou deuxième substrat revêtu et la contre-électrode de manière à obtenir un dépôt électrophorétique de particules de matériaux d'électrolyte solide inorganique sur ledit ou lesdits substrat(s) ;

(h) Assemblage (empilement) des substrats de cathode et d'anode pour obtenir une batterie.

Avantageusement lesdites particules *P+* et/ou *P-* et/ou *Pn* sont des nanoparticules.

Dans ce procédé, l'ordre des étapes (a),(b),(c) et (d) n'importe pas ; de même l'ordre des étapes (e) et (f) n'importe pas. Avant l'étape (g), on peut découper le substrat.

Un autre but de l'invention est la réalisation de dépôts électrophorétiques sur des substrats ne supportant pas des températures très élevées.

Cet objectif est atteint grâce à un procédé dans lequel l'étape (h) comprend une étape de densification mécanique et/ou de frittage à basse température ($T_R$), réalisées successivement ou simultanément, ou dans lequel l'étape (h) est suivie d'une telle étape. La température $T_R$ ne dépasse avantageusement pas 600°C. Dans certains modes de réalisation, elle ne dépasse pas 400°C.

L'étape dite de densification vise à augmenter la densité d'au moins une des couches déposées par électrophorèse, cette étape pouvant être effectuée sur le substrat conducteur doté d'au moins une couche d'anode ou d'au moins une couche de cathode, ladite au moins une couche d'anode ou de cathode pouvant éventuellement être revêtue d'au moins une couche d'électrolyte avant empilage et/ou sur la structure empilée.

Ladite étape de densification comprend au moins une étape de compactage mécanique et/ou une étape de traitement thermique (recuit) à une température $T_R$ qui, de préférence, ne dépasse pas 0,7 fois la température de fusion ou de décomposition (exprimée en °C), et de préférence ne dépasse par 0,5 fois (et encore plus préférentiellement ne dépasse pas 0,3 fois) la température de fusion ou de décomposition (exprimée en °C) du matériau d'anode, de cathode ou d'électrolyte le plus fusible soumis à ce recuit. Le terme « température de fusion » englobe ici la température de décomposition pour le cas des substances qui n'ont pas de point de fusion. En tout état de cause, il est préféré de ne passer dépasser une température $T_R$ de 600°C, et dans certains modes de réalisation, de ne pas dépasser 400°C. Lorsque les deux étapes, mécanique et de traitement thermique, sont effectuées, le traitement thermique peut être effectué avant ou après le compactage, ou bien les deux étapes peuvent être réalisées simultanément.

Au moins une des couches déposées par électrophorèse, et de préférence toutes, sont densifiées (la densification est appelé en anglais « consolidation »). Cette densification peut se faire sur chaque substrat, avant et/ou après le dépôt de l'électrolyte, et/ou après l'étape d'assemblage ou d'empilement. Très avantageusement, une étape de densification est effectuée après l'étape d'assemblage ou d'empilement afin d'obtenir une bonne liaison entre les couches d'électrolytes (dans le cas où il y a un dépôt d'électrolyte sur chaque électrode) ou entre la couche d'électrode et l'électrolyte qui est posé sur ladite couche d'électrode.

La densification peut se faire par un procédé mécanique, par exemple par un passage entre deux rouleaux, par pressage, de préférence isostatique, ou par choc, ou encore par un traitement thermique, ou bien par combinaison de ces procédés. La densification thermique peut être précédée, suivie ou accompagnée d'une ou plusieurs étapes de densification mécanique.

Dans un mode de réalisation particulier, la densification, et notamment le traitement thermique est effectuée sous vide ou sous atmosphère inerte.

Le dépôt par électrophorèse est effectué de préférence avec une suspension colloïdale de particules de taille inférieure à 1 $\mu$m, de préférence inférieure à 100 nm, ou même inférieure à 30 nm. L'utilisation de nanoparticules, et de préférence de taille inférieure à 100 nm, de préférence inférieure à 30 nm, permet d'obtenir une grande densité après densification. Cette densité atteint avantageusement 85%, de manière préférée 90%, et de manière encore plus préférée 95% de la densité théorique du corps massif.

Avantageusement, la porosité d'au moins une des couches après densification est inférieure à 15%, préférentiellement inférieure à 10% et encore plus préférentiellement inférieure à 5%.

Dans le procédé selon l'invention, de préférence, la taille moyenne $D_{50}$ des nanoparticules de matériau d'anode, de cathode et/ou d'électrolyte solide est inférieure à 1 $\mu$m, de manière préférée inférieure à 100 nm, mais on préfère encore plus les nanoparticules de dimensions inférieures à 50 nm et le plus préférentiellement inférieures à 30 nm. Ceci permet de densifier les couches minces par voie thermique à une température plus basse.

Dans ce but, on préfère des particules présentant une forme approximativement sphérique ou une forme de cube.

La taille de grain moyenne dans au moins une des couches d'anode, de cathode et/ou d'électrolyte après densification thermique est inférieure à 1 $\mu$m ; cela augmente la durée de vie de la batterie, probablement parce que le déséquilibre local de la batterie diminue. La durée du traitement thermique devrait être adaptée pour éviter le risque de croissance excessive (« parasitaire ») de certains grains.

Un autre but de l'invention est d'obtenir à l'issue du dépôt par électrophorèse, des couches de très forte compacité, exemptes notamment, de cavités, fissures et agglomérats, afin de faciliter la densification à basse température.

Dans certains modes de réalisation, le potentiel zêta des suspensions colloïdales approvisionnées SP+, SP- et/ou SPn aux étapes (a), (b) et (c) est supérieur à 40 mV, et encore plus préférentiellement supérieur à 60 mV, afin d'avoir des suspensions stables ne contenant pas d'agglomérats de particules pouvant conduire à des défauts dans les couches déposées. Ces suspensions peuvent contenir un stabilisant stérique ou, de préférence, électrostatique.

Cependant, on préfère que les suspensions ne contiennent pas de stabilisant. Les suspensions sans stabilisants stables ont avantageusement des extraits secs compris entre 2 et 20 g/L, la taille des particules étant de préférence inférieure à 100 nm, et encore plus préférentiellement inférieure à 50 nm. Dans ce cas, le potentiel Zêta de la suspension est généralement inférieure à 40 mV, et plus particulièrement compris entre 25 et 40 mV.

Le dépôt électrophorétique des nanoparticules peut être facilité grâce à une étape de dépôt d'un composé destiné à abaisser le potentiel Zêta sur les bandes conductrices préalablement à l'étape de dépôt des particules, préalablement au dépôt des particules P+, P- et ou Pn.

Un autre but de l'invention est le dépôt de films minces de compositions chimiques très variées, pouvant associer plusieurs phases et ce afin d'accroitre les fonctionnalités des dépôts. Ce but est atteint grâce à l'utilisation de la technique d'électrophorèse qui permet aisément de déposer des couches à partir de suspensions de mélanges de particules.

Un autre but de l'invention est de pouvoir contrôler très précisément les épaisseurs déposées (dans une gamme d'épaisseur pouvant aller de quelques centaines de nanomètres à quelques dizaines voire centaine de micromètre). Plus précisément, on souhaite disposer d'un procédé qui assure une parfaite homogénéité de l'épaisseur sur toute la surface du dépôt, et cela même sur des substrats rugueux ou de forme non plate, ainsi qu'une excellente reproductivité et répétabilité à l'échelle industrielle. Par ailleurs, on souhaite disposer d'une technique permettant le dépôt continu et constant sur la tranche des substrats.

Dans un mode de réalisation avantageux, l'épaisseur de la couche d'anode et/ou de cathode après densification est inférieure à 10 $\mu$m et préférentiellement inférieure à 5 $\mu$m. L'épaisseur de la couche d'électrolyte après densification est avantageusement inférieure à 5 $\mu$m, préférentiellement inférieure à 2 $\mu$m et encore plus préférentiellement inférieure à 1 $\mu$m.

Encore un autre but est d'économiser au mieux la matière première.

Ces objectifs sont atteints par l'utilisation de l'électrophorèse et par le contrôle précis du courant de dépôt tout au long du dépôt, sachant que le dépôt par électrophorèse ne se forme que sur un substrat suffisamment conducteur.

Un autre objet de l'invention est une batterie en couches minces entièrement solides susceptible d'être fabriquée par le procédé selon l'invention; elle présente une densité énergétique supérieure à 250 Wh/kg et/ou supérieure à 500 Wh/litre.

Encore un autre objet est une batterie en couches minces constituée de plusieurs éléments « collecteur / anode / électrolyte / cathode / collecteur » empilés sous la forme d'une structure monobloc rigide ne contenant pas de sel de lithium en tant qu'électrolyte.

Encore un autre objet est une batterie susceptible d'être obtenue par le procédé selon l'invention, comportant en outre au moins une couche de revêtement contenant des éléments métalliques, ou terminaison, déposée sur les tranches des électrodes, et un film isolant protecteur recouvrant les autres faces de la batterie, de manière à ce que le(s)dit(s) film isolant protecteur et ladite au moins une couche de revêtement métallique forment une protection hermétique de la batterie contre l'air ambiant.

**Description des figures**

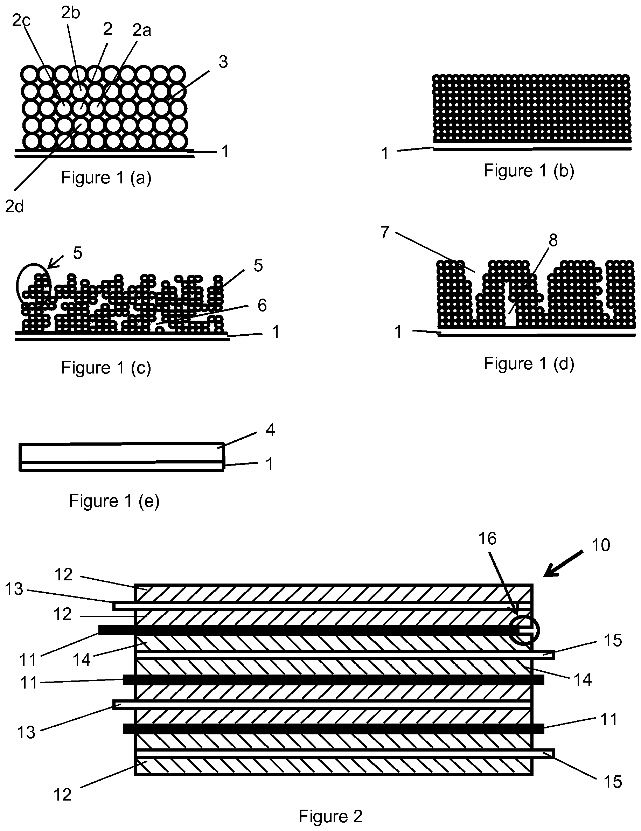

Les figures 1(a),(b),(c) et (d) montrent de manière schématique des couches formées par empilement de particules de forme approximativement isotrope. La figure 1(e) montre un film déposé par PVD sur un substrat.

La figure 1(a) montre de manière schématique un dépôt compact de particules **2** sur un substrat **1.** Toutes les particules **2** sont en contact avec leurs premiers voisins **2a, 2b, 2c, 2d.** Les porosités **3** se situent entre les particules **2.** Sur cette figure (ainsi que sur les figures 1(b), 1(c) et 1(d)), on a volontairement représenté un empilement moins dense que l'empilement hexagonal compact, afin de rendre mieux visible les porosités **3** entre les particules **2.**

La figure 1(b) montre de manière schématique un dépôt compact de particules **2** tel qu'il peut être obtenu en utilisant le procédé selon l'invention.

La figure 1(c) montre un dépôt de particules **2** sur un substrat, le dépôt présentant des défauts. Ces défauts sont essentiellement des cavités **6** liées à la présence d'agglomérats **5 ;** ces cavités **6** représentent donc une porosité inter-agglomérat, contrairement à la porosité intra-agglomérat **3** qui se situe à une échelle géométrique beaucoup plus fine. Dans le cas d'un dépôt par le procédé selon l'invention, ces agglomérats **5** se forment lorsque la suspension utilisée n'est pas suffisamment stable.

La figure 1(d) montre un dépôt de particules avec des fissures apparues après séchage ; ces fissures peuvent être des fissures ouvertes (débouchantes) **7** ou des fissures internes (non débouchantes) **8.**

La figure 1(e) illustre un dépôt dense **4** tel qu'il peut être obtenu par des techniques de type PVD ; la porosité de ces dépôts denses est proche de 0% car ils ne sont pas formées par empilement de particules.

La figure 2 illustre de manière schématique un empilement ou enroulement **10** d'électrodes de batterie entre lesquelles est positionné un séparateur **11** dans des batteries de l'état de la technique. Plus précisément, chaque cathode **12** et chaque anode **14** est reliée à son collecteur cathodique **13** et anodique **15,** respectivement, et chaque cathode **12** est séparée de son anode **14** par un séparateur **11** qui assure la fonction de transport des ions lithium via ses porosités imprégnées d'électrolyte, et d'isolation électrique entre les électrodes. Si le séparateur **11** est mal positionné entre les électrodes **12** et **14** (par exemple suite à un défaut de positionnement, une vibration, un choc lors de la fabrication), alors un court-circuit (ou un courant de fuite) peut apparaître entre les électrodes **12,14** dans le défaut **16** sur le bord de électrodes.

Les figures 3 à 25 illustrent des modes de réalisation de l'invention.

Les figures 3(a), 3(b), 3(c) et 3(d) avec la figure 4 montrent les produits obtenus à quatre étapes d'un mode de réalisation particulier du procédé selon l'invention.

Les figures 5a, 5a', 5b, 5b', 5c, 5c' montrent les produits obtenus à différents étapes d'un mode de réalisation particulier du procédé selon l'invention.

Les figures 6a, 6a', 6b, 6b', 6c, 6c' montrent les produits obtenus à différents étapes d'un mode de réalisation particulier du procédé selon l'invention.

Les figures 7a, 7a', 7b, 7b', 7c, 7c' montrent les produits obtenus à différents étapes d'un mode de réalisation particulier du procédé selon l'invention.

Les figures 8, 9, 10 et 11 montrent différents types de batteries obtenues à l'issue du procédé selon l'invention.

Les figures 12 et 13 montrent chacune un mode de réalisation des découpes sur une bande d'électrode.

Les figures 14a, 14b, 14c, 14d montrent les produits obtenus à différents étapes d'un autre mode de réalisation particulier du procédé selon l'invention, dans lequel le substrat sur lequel on dépose les électrodes est une bande de polymère métallisé.

Les figures 15a, 15b, 15c, 15d, 15e, 15f montrent les produits obtenus à différents étapes d'un autre mode de réalisation particulier du procédé selon l'invention, dans lequel le substrat sur lequel on dépose les électrodes est constitué de bandes de polymère photosensible, ou pouvant servir à réaliser une épargne, entourant une couche métallique.

Les figures 16a, 16b, 16c, 16d montrent les produits obtenus à différents étapes d'un autre mode de réalisation particulier du procédé selon l'invention, dans lequel le substrat sur lequel on dépose les électrodes est une plaque de polymère comportant des zones métallisées.

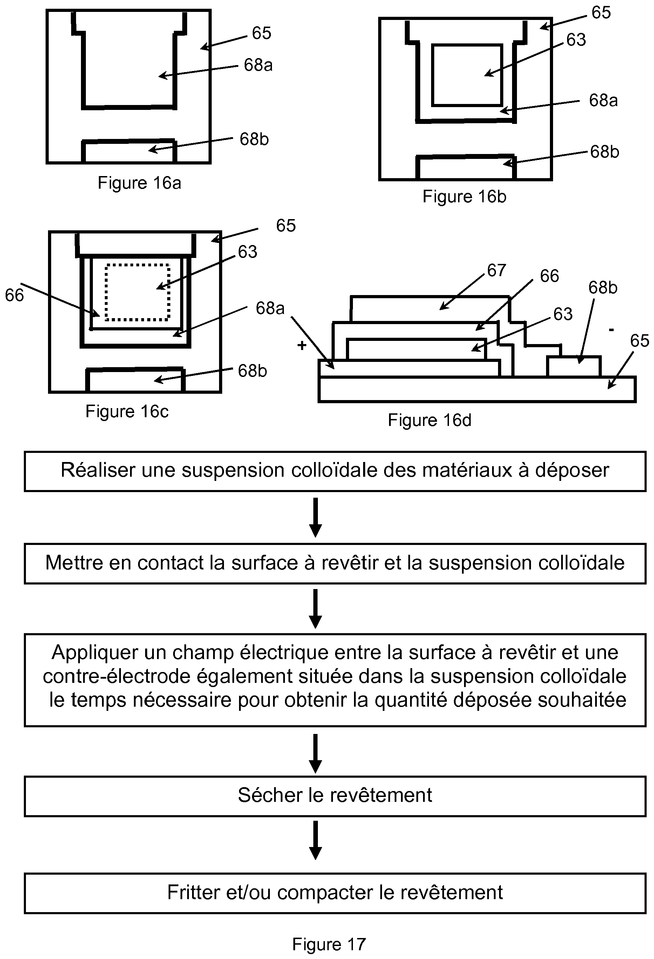

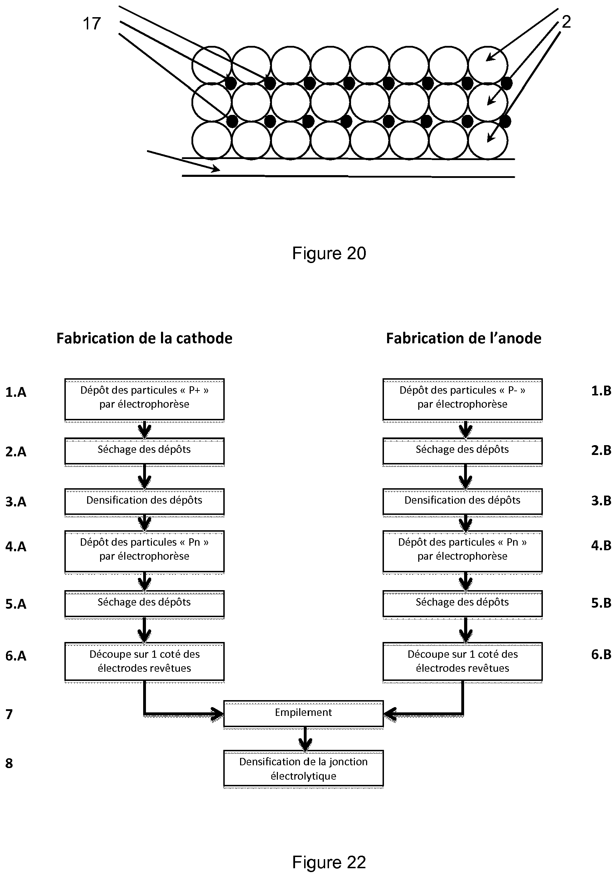

Les diagrammes de la figure 17 et de la figure 22 présentent des modes de réalisation typiques du procédé selon l'invention.

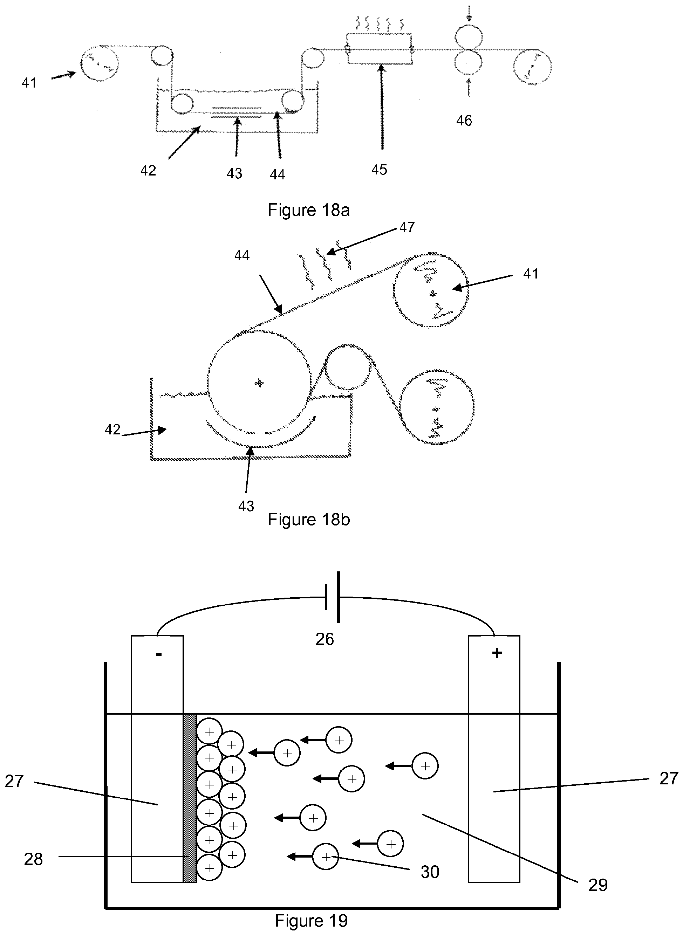

Les figures 18a et 18b représentent de manière schématique des dispositifs pour la mise en oeuvre du procédé selon l'invention.

La figure 19 illustre le principe de fonctionnement des dépôts par électrophorèse

La figure 20 est une représentation schématique d'un dépôt de nanoparticules de deux tailles différentes.

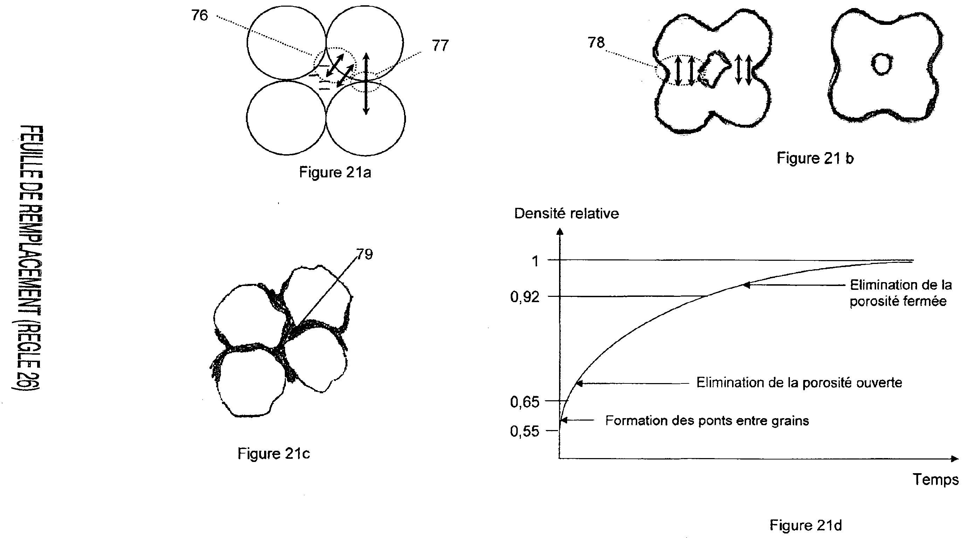

Les figures 21a, 21b, 21c représentent des chemins de diffusion du lithium dans différentes configurations d'assemblages de particules. La figure 21d représente l'évolution de la porosité en fonction de la densité du dépôt.

La figure 22 montre les étapes d'un mode de réalisation du procédé selon l'invention

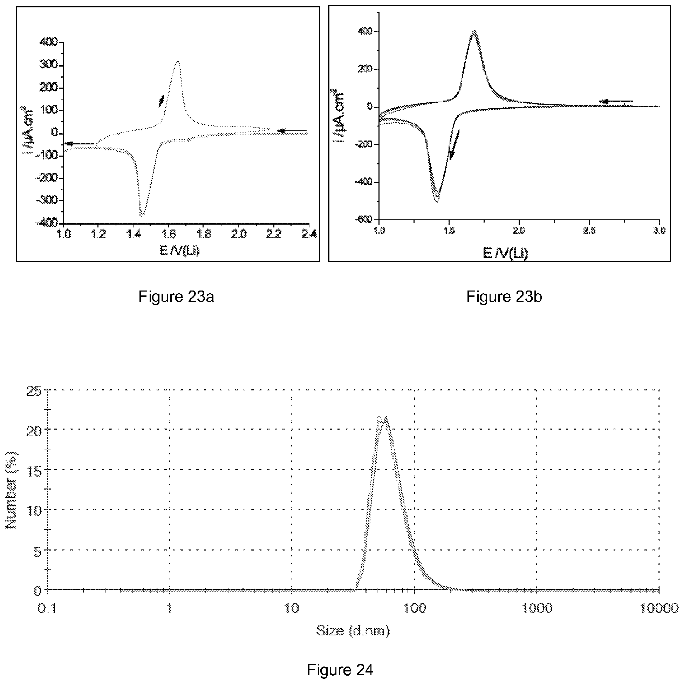

La figure 23a est une courbe de voltampérométrie pour une suspension de particules de $Li_4Ti_5O_{12}$ avec un extrait sec de 10 g/L. La figure 23b est une courbe de voltampérométrie pour une suspension de particules de $Li_4Ti_5O_{12}$ avec un extrait sec de 2g/L et quelques ppm d'acide citrique.

La figure 24 est un diagramme DLS montrant la distribution de la taille de particules d'électrolyte ($Li_{1,3}Al_{0,3}Ti_{1,7}(PO_4)_3$) en suspension.

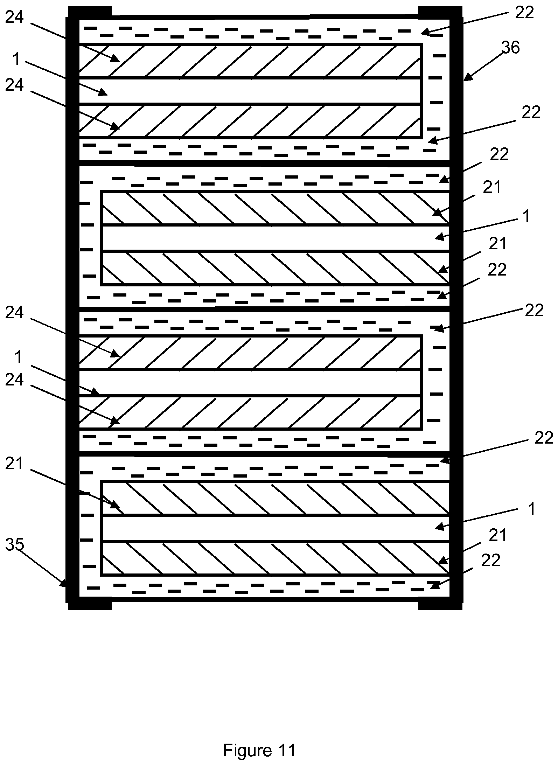

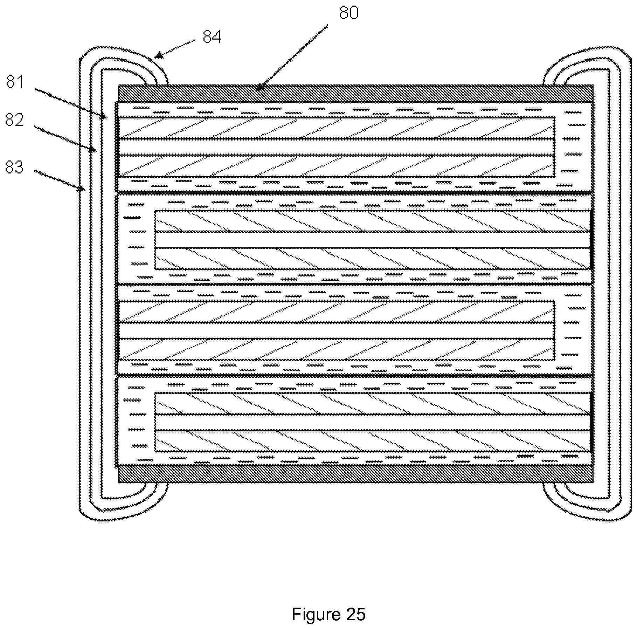

La figure 25 représente une batterie telle qu'à la figure 11, comprenant en outre des revêtements de **protection** contre les gaz atmosphériques.

Liste de références

| 1 | Substrat |
|---|---|
| 2,2a,2b,2c,2d | Particules |
| 3 | Pore |
| 4 | Film obtenu par dépôt PVD |
| 5 | Agglomérat |
| 6 | Cavité |
| 7 | Fissure débouchante |
| 8 | Fissure non débouchante |
| 9 | Masque isolant |
| 10 | Batterie selon l'état de la technique |
| 11 | Séparateur |
| 12 | Cathode |
| 13 | Collecteur de courant cathodique |
| 14 | Anode |
| 15 | Collecteur de courant anodique |
| 16 | Défaut |
| 17 | Particules de taille inférieure à celle des particules 2 |
| 20 | Substrat |
| 21 | Anode |
| 22, 22', 22" | Electrolyte |
| 23, 23', 23" | Bord sectionné |
| 24 | Cathode |
| 25 | Liaison entre deux couches d'électrolyte |
| 26 | Alimentation électrique, source de tension |
| 27 | Substrat et contre électrode |

(suite)

| 28 | Dépôt |
|---|---|
| 29 | Suspension colloïdale |
| 30 | Particules |
| 35,36 | Contacts électriques, terminaison |
| 41 | Dérouleur |
| 42 | Suspension colloïdale |
| 43 | Contre-électrode |
| 44 | Substrat (feuillard) |
| 45 | Four de séchage |
| 46 | Dispositif de compaction mécanique |
| 47 | Séchage du substrat revêtu du film déposé par électrophorèse |
| 50 | Tranche du substrat |
| 60 | Film métallique recouvert de résine photosensible |
| 61, 61a, 61b | Film polymère |
| 62 | Couche métallique du substrat 60 |
| 63 | Couche de cathode |
| 64a, 64b | Epargne |
| 65 | Substrat isolant |
| 66 | Couche d'électrolyte |
| 67 | Couche d'anode |
| 68a, 68b | Films métalliques sur substrat isolant 65 |
| 71 | Bande de cathode |
| 72 | Bande d'anode |
| 73 | Créneau |
| 74 | Plaque d'anode |
| 75 | Plaque de cathode |
| 76 | Zone de contact surfacique entre les particules et l'électrolyte contenu dans les porosités (chemin de diffusion peu résistif) |
| 77 | Zone de contact ponctuel entre les particules (la diffusion du lithium étant limitée sur ce contact ponctuel) |
| 78 | Soudure des particules durant la densification ayant donné lieu à l'apparition de chemins de diffusion dans le solide, pour le transport des charges électriques (électrons et ions) |
| 79 | Phase fusible ayant consolidé les particules entre elles |
| 80 | Film polymère protecteur |
| 81,82,83 | Couches de terminaison |
| 84 | Recouvrement du film polymère protecteur par les couches de terminaison |

**Description détaillée de l'invention**

Dans le cadre de la présente invention, on entend par « dépôt électrophorétique » ou « dépôt par électrophorèse » une couche déposée par un procédé de dépôt de particules électriquement chargées en surface, préalablement mises en suspension dans un milieu liquide, sur un substrat conducteur, le déplacement des particules vers la surface du substrat étant généré par l'application d'un champ électrique entre deux électrodes placées dans la suspension, l'une des électrodes constituant le substrat conducteur sur lequel le dépôt est effectué, l'autre électrode (« contre-électrode ») étant posée dans la phase liquide. Un dépôt compact de particules se forme sur le substrat, si le potentiel zêta présente une valeur appropriée comme il sera expliqué ci-dessous.

Dans le cadre du présent document, la taille d'une particule est sa plus grande dimension. Ainsi, une « nanoparticule » est une particule dont au moins une des dimensions est inférieure à 100 nm. La « taille de particules » ou « taille moyenne de particules » d'une poudre ou d'un ensemble des particules est donnée en $D_{50}$.

Le « potentiel zêta » d'une suspension est défini comme la différence de potentiel existant entre le sein de la solution, et le plan de cisaillement de la particule. Il est représentatif de la stabilité d'une suspension. Le plan de cisaillement (ou rayon hydrodynamique) correspond à une sphère imaginaire autour de la particule dans laquelle le solvant bouge avec la particule lorsque les particules se déplacent dans la solution. La base théorique et la détermination du potentiel zêta sont connues de l'électrochimiste qui développe des dépôts par électrophorèse ; il peut être déduit de la mobilité électrophorétique. Pour la mesure directe du potentiel zêta, il existe différentes techniques et dispositifs commercialisés. Lorsque l'extrait sec est faible, on peut mesurer le potentiel zêta à l'aide d'un équipement de type Zetasizer Nano ZS de la société Malvern. Cet équipement mesure à l'aide de dispositifs optiques les vitesses de déplacement des particules en fonction du champ électrique qui leur est appliquée. Aussi, il faut que la solution soit très diluée pour permettre le passage de la lumière. Lorsque l'extrait sec est plus important, il est possible de mesurer le potentiel zêta à l'aide de techniques d'acoustophorèse, en utilisant par exemple un dispositif appelé « acoustosizer » de la société Colloidal Dynamics. La vitesse des particules est alors mesurée par des techniques acoustiques.

On entend par « dispersant » un composé apte à stabiliser la suspension colloïdale et notamment à éviter que les particules ne s'agglomèrent.

Le procédé selon l'invention comprend les étapes essentielles de dépôt électrophorétique de particules de matériaux de cathode, d'anode et d'électrolyte solide. Un tel procédé permet de réduire de manière significative la quantité de défauts dans les couches obtenues par rapport aux procédés connus, notamment les grandes porosités, cavités, craquelures et agglomérats ; la qualité des couches déposées est meilleure lorsque la suspension à partir de laquelle le dépôt est effectué est suffisamment stable.

Le procédé selon l'invention permet le dépôt de couches minces d'électrodes et/ou d'électrolyte. Ces couches ont une épaisseur généralement inférieure à environ 20 $\mu$m, de préférence inférieure à environ 10 $\mu$m, et encore plus préférentiellement inférieure à 5 $\mu$m.

Le procédé de fabrication de batteries en couches minces entièrement solides selon la présente invention présente une alternative avantageuse aux techniques connues, et particulièrement aux techniques de dépôt PVD, en permettant de faire des dépôts très denses, à basse température, sur de grandes surfaces de substrat, avec des vitesses de dépôt élevées, des épaisseurs contrôlables facilement et de manière très précise (en fonction de la taille des particules), sur un large intervalle d'épaisseur pouvant aller du dixième de micron à plusieurs dizaines voire centaines de microns, sans induire d'investissements très couteux dans des machines complexes et peu productives.

Les figures 1a à 1c illustrent les différences entre les porosités **3** intra agglomérats, situées entre les particules **2,** et que nous appellerons dans ce document « porosités », et les porosités **6** inter agglomérats, situées entre les agglomérats **5** et que nous appellerons « cavités » **6**.

Un dépôt compact est un dépôt qui ne comporte pas de cavités, ni de fissures. En revanche, il comporte des porosités dont le taux s'exprime en pourcentage et se calcule de la manière suivante :

$$\text{Porosité [\%]} = [(\text{densité du matériau massif} - \text{densité vraie})/\text{densité vraie}] \times 100$$

sachant que la « densité vraie » est la densité mesurée sur la couche déposée et que la densité du matériau massif est la densité massive du matériau déposé, en faisant abstraction de la présence de particules dont l'empilement forme une porosité.

Nous décrivons ici en détail chacune des étapes du procédé selon l'invention.

*Préparation des suspensions*

De manière à avoir un dépôt parfaitement homogène en épaisseur, sans rugosité, et avec peu de défauts et le plus compact possible à l'issue du procédé de dépôt par électrophorèse, le dépôt est préférentiellement réalisé à partir de suspensions colloïdales *SP+, SP-, SPn* très stables. La stabilité des suspensions dépend de la taille des particules *P+, P-, Pn,* ainsi que de la nature du solvant utilisé et du stabilisant ayant servi à stabiliser la suspension colloïdale. L'approvisionnement de ces suspensions colloïdales correspond aux étapes (a), (b) et (c) d'un mode de réalisation principal du procédé selon l'invention.

On entend par « *SP+* » une suspension colloïdale de particules « *P+* » contenant des matériaux permettant d'obtenir un film de cathode, par « *SP-* » une suspension colloïdale contenant des particules P- de matériaux permettant d'obtenir un film d'anode, par « *SPn* » une suspension colloïdale de particules « *Pn* » de matériaux permettant d'obtenir un film d'électrolyte.

Afin de faciliter la densification ultérieure éventuelle du dépôt et garantir la possibilité de faire des dépôts en couches minces avec des épaisseurs et des profils (rugosité) très précis, des suspensions colloïdales contenant des particules de tailles nanométriques sont préférées. Ces particules ont de préférence une taille de particules moyenne $D_{50}$ inférieure à 100 nm, et plus préférentiellement (surtout dans le cas où la suspension comporte des particules de matériaux à point de fusion élevés) inférieure à 30 nm. En effet, avec des particules de faibles dimensions, la densification du dépôt est grandement facilitée dès lors que le dépôt est compact.

La réalisation de dépôts électrophorétiques à partir de suspensions colloïdales stables permet d'éviter la formation de pores, de cavités et d'amas préjudiciables à la densification du dépôt. De plus, avec cette technique, il est possible d'obtenir des dépôts ayant une excellente compacité, sans nécessairement avoir recours à des pressages mécaniques, et quelle que soit la taille des particules déposées.

La stabilité des suspensions peut être exprimée par leur potentiel zêta. Dans le cadre de la présente invention, la suspension est considérée comme stable lorsque son potentiel zêta est supérieur à 40 mV, et très stable lorsqu'il est supérieur à 60 mV. En revanche, lorsque le potentiel zêta est inférieur à 20 mV, des agglomérats de particules peuvent apparaitre. Aussi, pour garantir la bonne compacité du film mince, les dépôts sont dans certains modes de réalisation, réalisés à partir de suspensions colloïdales ayant un potentiel zêta supérieur à 40 mV, et encore plus préférentiellement 60 mV (en valeur absolue). Cependant dans d'autres modes de réalisation préférés dans le cadre de la présente invention, les suspensions ont de faibles extraits secs en particules et le potentiel Zêta est inférieur à 40 mV, ainsi que cela est décrit plus en détail ci-après.

Les suspensions colloïdales destinées à être utilisées en électrophorèse comportent un solvant isolant électrique, qui peut être un solvant organique, ou de l'eau déminéralisée, ou un mélange de solvants, et des particules à déposer.

Dans une suspension stable, les particules ne s'agglomèrent pas entre elles pour créer des amas susceptibles d'induire des cavités, agglomérats et/ou défauts importants dans le dépôt. Les particules restent isolées dans la suspension.

Aussi, dans un mode de réalisation de la présente invention, la stabilité de la suspension nécessaire à l'obtention d'un dépôt compact est obtenue grâce à l'ajout de stabilisants. Le stabilisant permet d'éviter la floculation des poudres et la formation d'agglomérats. Il peut agir par un effet électrostatique ou par un effet stérique. La stabilisation électrostatique est basée sur les interactions électrostatiques entre des charges et est obtenue par la distribution d'espèces chargées (ions) dans la solution.

La stabilisation électrostatique est contrôlée par la charge de surface des particules ; elle peut par conséquent dépendre du pH. La stabilisation stérique met en oeuvre des polymères, tensio-actifs non ioniques voire des protéines, qui, ajoutés à la suspension, viennent s'absorber à la surface des particules pour causer la répulsion par encombrement de l'espace inter-particulaire. Une combinaison des deux mécanismes de stabilisation est également possible. Dans le cadre de la présente invention, on préfère la stabilisation électrostatique qui est facile à mettre en oeuvre, réversible, peu onéreuse, et qui facilite les processus ultérieurs de consolidation.

Cependant, les inventeurs ont remarqué qu'avec les nanoparticules des matériaux de batterie utilisées dans le cadre de la présente invention, il est possible d'obtenir des suspensions colloïdales stables de particules non agglomérées entre elles et/ou d'agglomérats de quelques particules, sans ajouts de stabilisants. Les particules et/ou agglomérats ont de préférence une taille inférieure à 100 nm, et plus préférentiellement inférieure à 50 nm.

Ces suspensions ont été obtenues pour de faibles extraits secs, compris entre 2 g/L et 20 g/L, de préférence entre 3 et 10 g/L, et plus particulièrement pour des extraits secs de l'ordre de 4g/l, dans l'alcool et l'acétone. Ces suspensions colloïdales stables de particules sans ajout de stabilisant sont particulièrement préférées dans le cadre de la présente invention.

Le potentiel Zêta de telles suspensions est généralement inférieur à 40 mV, et plus particulièrement compris entre 25 et 40 mV. Cela pourrait signifier que de telles suspensions tendent à être instables, cependant les inventeurs ont constaté que l'emploi de ces suspensions pour le dépôt électrophorétique conduisait à des films déposés très bonne qualité.

Dans ce type de suspensions, les nanoparticules sont chargées négativement, elles sont donc compatibles des dépôts en anaphorèse. L'ajout de stabilisants ou de cations dans la suspension pour modifier la charge de surface des nanoparticules afin de les rendre compatibles de polarisations cataphorétiques pourrait conduire à polluer les dépôts. Des stabilisants organiques, peu volatiles pourraient conduire à isoler électriquement les nanoparticules interdisant ainsi toute réponse électrochimique.

Lorsque l'eau est utilisée comme solvant, des tensions de dépôt inférieures à 5 V doivent être privilégiées. En effet, au-delà de 5 V l'eau risque de subir une électrolyse donnant lieu à des productions de gaz sur les électrodes qui rendent les dépôts poreux et diminuent leur adhérence sur le substrat. Par ailleurs, les réactions galvaniques en milieu aqueux donnent lieu à la formation de cations métalliques susceptibles de polluer les dépôts.

Dans un mode de réalisation préféré, les dépôts se font en phase solvantée. Il est ainsi possible de travailler à des valeurs de tension plus élevées, augmentant ainsi les vitesses de dépôts.

Selon l'invention, les nanoparticules utilisées pour la réalisation du film mince de <u>cathode</u> sont choisies de manière préférée, mais non exhaustive, parmi un ou plusieurs des matériaux Mx suivants :

(i) les oxydes $LiMn_2O_4$, $LiCoO_2$, $LiNiO_2$, $LiMn_{1,5}Ni_{0,5}O_4$, $LiMn_{1,5}Ni_{0,5-x}X_xO_4$ (où x est sélectionné parmi Al, Fe, Cr, Co, Rh, Nd, autres terres rares, et où 0 < x < 0,1), $LiFeO_2$, $LiMn_{1/3}Ni_{1/3}Co_{1/3}O_4$ ;
(ii) les phosphates $LiFePO_4$, $LiMnPO_4$, $LiCoPO_4$, $LiNiPO_4$, $Li_3V_2(PO_4)_3$ ;
(iii) toutes les formes lithiées des chalcogénides suivants : $V_2O_5$, $V_3O_8$, $TiS_2$, $TiO_yS_z$, $WO_yS_z$, $CuS$, $CuS_2$.

Selon l'invention, les nanoparticules utilisées pour la réalisation du film mince d'<u>anode</u> sont choisies de manière préférée, mais non exhaustive, parmi un ou plusieurs des matériaux suivants :

(i) les oxynitrures d'étain (de formule typique $SnO_xN_y$) ;
(ii) les oxynitrures mixtes de silicium et étain (de formule typique $Si_aSn_bO_yN_z$ avec a>0, b>0, a+b≤2, 0<y≤4, 0<z3) (appelés aussi SiTON), et en particulier le $SiSn_{0,87}O_{1,2}N_{1,72}$ ; ainsi que les oxynitrures sous la forme $Si_aSn_bC_cO_yN_z$ avec a>0, b>0, a+b≤2, 0<c-10, 0<y<24, 0<z<17; $Si_aSn_bC_cO_yN_zX_n$ et $Si_aSn_bO_yN_zX_n$ avec Xn au moins un des éléments parmi F, Cl, Br, I, S, Se, Te, P, As, Sb, Bi, Ge, Pb.
(iii) les nitrures de type $Si_xN_y$ (en particulier avec x=3 et y=4), $Sn_xN_y$ (en particulier avec x=3 et y=4), $Zn_xN_y$ (en particulier avec x=3 et y=4), $Li_{3-x}M_xN$ (avec M = Co, Ni, Cu) ;
(iv) les oxydes $SnO_2$, $Li_4Ti_5O_{12}$, $SnB_{0,6}P_{0,4}O_{2,9}$.

Pour la réalisation de l'anode ou de la cathode, on peut ajouter aux matériaux cités précédemment des nanoparticules de matériaux conducteurs électroniques, et en particulier de graphite, et/ou des nanoparticules de matériaux conducteurs des ions lithium, du type de ceux utilisés pour réaliser les films d'électrolyte. En effet, certains matériaux d'électrode sont de mauvais conducteurs ioniques et électriques, par conséquent lorsque les épaisseurs déposées sont supérieures à 0,5 $\mu$m l'électrode peut être trop résistive, et elle ne fonctionne plus. Or des épaisseurs de 1 à 10 $\mu$m sont généralement souhaitables pour les électrodes, afin d'avoir des batteries avec de bonnes densités d'énergie. Dans ce cas il est nécessaire de réaliser un co-dépôt de particules de matériaux d'électrode et de particules conductrices (ioniques et/ou électriques).

L'électrolyte doit être un bon conducteur ionique mais également un isolant électrique. Selon l'invention, les nanoparticules utilisées pour la réalisation du film mince de l'<u>électrolyte</u> sont choisies de manière préférée parmi un ou plusieurs des matériaux Mx suivants :

(i) les composés lithiés à base d'oxynitrure de lithium et de phosphore (appelés LiPON) sous forme $Li_xPO_yN_z$ avec x -2,8 et 2y+3z -7,8 et 0,16 ≤ z ≤ 0,4, et en particulier le $Li_{2,9}PO_{3,3}N_{0,46}$, mais également toutes les variantes sous forme $Li_wPO_xN_yS_z$ avec 2x+3y+2z = 5=w et 3,2 ≤ x ≤ 3,8, 0,13 ≤ y ≤ 0,4, 0 ≤ z ≤ 0,2, 2,9 ≤ w ≤ 3,3 ou sous forme $Li_tP_xAl_yO_uN_vS_w$ avec 5x+3y=5, 2u+3v+2w=5+t, 2,9≤t≤3,3, 0,94≤x≤0,84, 0,094≤y≤0,26, 3,2≤u≤3,8, 0,133≤v≤0,46, 0≤w≤0,2 ;
(ii) les composé lithiés à base d'oxynitrure de lithium, de phosphore et de silicium (appelés LiSiPON), et en particulier le $Li_{1,9}Si_{0,28}P_{1,0}O_{1,1}N_{1,0}$ ;
(iii) les oxynitrures de lithium de types LiBON, LiBSO, LiSiPON, LiSON, thio-LiSiCON, LiPONB (ou B, P et S représentent respectivement le bore, le phosphore et le soufre);
(iv) les composés $La_{0,51}Li_{0,34}Ti_{2,94}$, $Li_{3,4}V_{0,4}Ge_{0,6}O_4$, $Li_2O-Nb_2O_5$, $LiAlGaSPO_4$ ;
(v) les formulations à base de $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,5}5TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (où M = Ge, Ti, et/ou Hf, et où 0 < x < 1), $Li_{1+x+y}Al_xTi_{2-x}Si_yP_{3-y}O_{12}f$(où 0≤x≤1 et 0≤y≤1), $Li_{1+x+z}M_x(Ge_{1-y}Ti_y)_{2-x}Si_zP_{3-z}O_{12}$ (où 0 ≤ x ≤0,8 ; 0 ≤ y ≤ 1,0 ; 0 ≤ z ≤ 0,6), et en particulier les formulations 4,9LiI-34,1 $Li_2O$-61$B_2O_3$, 0,30$Li_2S$-0,26$B_2S_3$-0,44LiI, 60$Li_2S$-40$SiS_2$, 0,02$Li_3PO_4$-0,98($Li_2S$-$SiS_2$), 2($Li_{1,4}Ti_2Si_{0,4}P_{2,6}O_{12}$)-$AlPO_4$, 0,7$Li_2S$-0,3$P_2S_5$.

Une fois la composition chimique cible souhaitée définie, i.e. nature de la poudre ou des mélanges de poudres, les nanoparticules sont mises en solution dans une phase liquide appropriée. Dans certains modes de réalisation, on ajoute un stabilisant afin d'obtenir une suspension dont le potentiel zêta est de préférence supérieur à 40 mV, et plus préférentiellement supérieur à 60 mV.

Cependant, de manière avantageuse, on utilise des suspensions ne contenant pas de stabilisants, et en particulier des suspensions ayant de faibles extraits secs (généralement inférieur à 20g/L et de préférence inférieur à 10 g/l), et en particulier des suspensions contenant des particules de taille inférieure à 100 nm, et de préférence inférieure à 50 nm. Dans ce cas le potentiel Zêta de la suspension est généralement compris entre 25 et 40 mV.

A titre d'exemple les solvants utilisés peuvent être à base de cétone, d'alcool ou d'un mélange des deux.

Parmi les stabilisants stériques susceptibles d'être utilisés, on peut citer notamment le polyéthylène imine (PEI), l'acide polyacrylique (PAA), l'acide citrique, la nitrocellulose sous réserve qu'ils soient solubles dans la solvant organique choisi.

Des stabilisations électrostatiques peuvent être réalisées par ajout d'iodure, par ajouts d'acides ou bases. L'acidification ou basification de la solution peut être réalisée par ajout de traces d'eau et d'acides lorsque la suspension est réalisée en phase solvantée.

La conductivité électrique de la suspension peut être contrôlée pour obtenir un gradient de potentiel important entre les deux électrodes, sans risque de claquage diélectrique. De préférence la conductivité de la suspension colloïdale est comprise entre 1 et 20 $\mu$S/cm. Des acides et bases fortes peuvent être ajoutés en faible quantité pour contrôler la conductivité de la suspension et charger les surfaces des particules.

Pour obtenir une suspension stable, avec des particules de tailles nanométriques sans agglomérats, il peut être nécessaire de réaliser une étape de broyage et/ou de dispersion des poudres, préalablement à la mise en suspension des nanoparticules, afin de désagglomérer les particules et éventuellement d'ajuster leur taille (pour obtenir une taille moyenne inférieure à 100 nm ou même inférieure à 30 nm) et de réduire la dispersion de taille. Des ultrasons peuvent également être mis en oeuvre pour aider à la désagglomération et à la mise en suspension des particules.

Les défauts créés dans les particules pendant les étapes de broyage dispersion, sont également susceptibles de diminuer la température de densification, au même titre que la réalisation de compressions mécaniques.

*Dépôt des couches*

Selon l'invention, toutes les couches de la batterie (c'est-à-dire l'anode, l'électrolyte solide et la cathode) sont déposées par voie électrophorétique (étapes (e), (f), d'un des modes de réalisation principal du procédé selon l'invention (voir aussi figure 22, étapes 1.A, 1.B, 4.1 et 4.B pour un autre mode de réalisation de l'invention). Le dépôt électrophorétique de particules se fait par l'application d'un champ électrique entre le substrat sur lequel est réalisé le dépôt et une contre-électrode, permettant de mettre les particules chargées de la suspension colloïdale en mouvement, et de les déposer sur le substrat. L'absence de liants et d'autres solvants déposés en surface avec les particules permet d'obtenir des dépôts très compacts. La compacité obtenue grâce au dépôt électrophorétique, et l'absence de composés organiques en grande quantité dans le dépôt permet de limiter voire d'éviter les risques de craquelures ou d'apparition d'autres défauts dans le dépôt pendant les étapes de séchage.

D'autre part, du fait que le dépôt obtenu par électrophorèse ne contient pas de liants, ou d'autres composés organiques, le procédé selon la présente invention ne nécessite pas d'étapes de brulage, ou d'évaporation de composés corrosifs ou nocifs. Or, l'accroissement des contraintes économiques et environnementales impose de réduire les rejets dans l'atmosphère, ainsi la présente invention répond bien à ces contraintes.

De plus la vitesse de dépôt peut être très élevée en fonction du champ électrique appliqué et de la mobilité électrophorétique des particules de la suspension. Pour une tension appliquée de 200 V, des vitesses de dépôt de l'ordre de 10 $\mu$m/min peuvent être obtenues.

La figure 19 illustre le principe de fonctionnement des dépôts par électrophorèse.

L'inventeur a constaté que cette technique permet de réaliser des dépôts sur de très larges surfaces avec une excellente homogénéité (sous réserve que les concentrations en particules et champs électriques soient homogènes sur la surface du substrat). Elle se prête aussi bien à un procédé continu en bande, c'est-à-dire le substrat est avantageusement une bande ; pendant le dépôt par électrophorèse, la bande est avantageusement stationnaire par rapport à la phase liquide.

Le substrat peut être une feuille ou une bande présentant une surface conductrice ou des éléments conducteurs, par exemple des zones conductrices ; son approvisionnement représente l'étape (d) d'un mode de réalisation principal du procédé selon l'invention. A titre d'exemple, un feuillard de cuivre ou aluminium, d'une épaisseur qui peut être par exemple de 6 $\mu$m, peut être utilisé, ou une bande polymère présentant un dépôt de surface électriquement conducteur.

Avantageusement le substrat est une feuille mince d'aluminium. En effet, les substrats en aluminium sont compatibles des procédés de dépôt anaphorétiques, contrairement à certains autres métaux et en particulier le cuivre qui a tendance à se dissoudre en polarisation anodique. Cette dissolution en surface des bandes de cuivre ne permet pas de créer une base d'accroche stable pour les dépôts d'électrode. Or les inventeurs ont remarqué qu'avec les nanoparticules des matériaux de batterie, il était possible d'obtenir des suspensions colloïdales de particules monodisperses, sans ajouts de stabilisants, mais que ces nanoparticules étaient toujours chargées négativement et par conséquent compatibles des dépôts en anaphorèse. Ces suspensions ont été obtenues pour de faibles extraits secs, de l'ordre de 4g/l, dans un solvant organique de type alcool (par exemple éthanol) et/ou cétone (par exemple acétone).

Le substrat peut être préparé par exemple de la manière suivante : on approvisionne un feuillard d'aluminium d'une épaisseur comprise entre 5 et 20 $\mu$m, et de préférence de l'ordre de 15 $\mu$m. Le feuillard est ensuite positionné de manière à être maintenu « à plat ». La surface du feuillard d'aluminium est de préférence nettoyée, par exemple par immersion dans un bain de nettoyage. Ce nettoyage peut être par exemple réalisé par des immersions dans un bain de lessive de chez NGL technologie sous ultrasons, suivi d'un rinçage à l'eau distillée.

Le feuillard est traité par électro-polissage afin de réduire son épaisseur, et/ou de supprimer les rugosités et microrugosités de surface. Ce traitement d'électro-polissage peut être réalisé dans une solution ayant la composition chimique suivante: 80% d'éthanol absolu, 13,8% d'eau distillée, 6,2% d'acide perchlorique à 70%. La tension appliquée est de l'ordre de 15V. Si nécessaire, le bain de traitement peut être refroidi pour éviter les échauffements liés aux fortes densités de courant.

Pour une meilleure qualité de surface, d'autres formulations de bains peuvent être utilisées, comme par exemple, des bains à base de solutions de type EPS 1250 ou EPS 1300 de chez EP-Systems.

Après le traitement d'électro-polissage, la surface est rincée à l'eau distillée. L'épaisseur du feuillard à l'issue de ce traitement est généralement comprise entre 1 et 10 $\mu$m.

Ce feuillard est avantageusement utilisé comme substrat d'anode et comme ubstrat de cathode dans le procédé selon l'invention.

Optionnellement, un traitement de nickelage peut être réalisé directement sur la surface du feuillard juste après son traitement d'électro-polissage. Ce traitement peut être réalisé de différentes manières, soit par dépôt électrochimique, soit par immersion dans une solution contenant des sels de nickel, soit les deux successivement. A titre d'exemple, le dépôt électrolytique peut être réalisé dans un bain de composition suivante: sulfamate de nickel à 300 g/l, $H_3BO_3$ à 30 g/l, $NiCl_2$ à 30 g/l. Le nickelage est réalisé sur le feuillard en aluminium, dont la surface a été préalablement activée par électro-polissage sous une densité de courant de l'ordre de 2 A/dm$^2$, en utilisant une contre électrode en nickel. Ce traitement de nickelage permet d'éviter la formation d'une couche d'oxyde à la surface de l'aluminium, et d'améliorer la qualité des contacts électriques, et l'adhérence des dépôts.

L'épaisseur de chacune des couches de cathode et d'anode est de préférence comprise entre 2 $\mu$m et 10 $\mu$m. L'épaisseur de la couche d'électrolyte est de préférence inférieure à 2 $\mu$m.

Après le dépôt de la couche et avant l'éventuelle étape de frittage par traitement thermique, on peut effectuer une étape de densification mécanique (par exemple par pressage) afin de compacter davantage les particules et induire des déformations des particules qui faciliteront encore plus la densification ultérieure.

Cependant on préfère dans d'autres modes de réalisation procéder au traitement thermique avant l'étape de densification mécanique.

Le dépôt par électrophorèse peut être mis en oeuvre dans un procédé de type « batch » (statique) ou dans un procédé continu. Les figures 18a et 18b illustrent différents modes de réalisation de dépôts par électrophorèse, pour réaliser aussi bien des bandes minces ou bien des revêtements sur substrat conducteur.

Lors du dépôt électrophorétique, une alimentation stabilisée permet d'appliquer une tension entre le substrat conducteur et deux électrodes situées de part et autre de ce substrat. Cette tension peut être continue ou alternative. Un suivi précis des courants obtenus permet de suivre et de contrôler précisément les épaisseurs déposées. Lorsque les couches déposées sont isolantes, en fonction de leur épaisseur, elles peuvent affecter la valeur du champ électrique, aussi, dans ce cas, on privilégie un mode de dépôt en courant contrôlé. En fonction de la résistivité de l'interface, la valeur du champ électrique est modifiée.

La figure 18a montre de manière schématique une installation pour mettre en oeuvre le procédé selon l'invention. L'alimentation électrique située entre les contre-électrodes **43** et le substrat conducteur **44** n'est pas représentée. On applique un champ électrique entre les deux contre-électrodes **43** et le substrat **44** pour déposer des particules de la suspension colloïdale **42** sur les deux faces du substrat **44.**

Le bobineau de feuillard (bande) conducteur électrique **44** servant de substrat est déroulé à partir d'un dérouleur **41.** Après le dépôt la couche déposée est séchée dans un four de séchage **45** puis consolidé par compaction mécanique à l'aide d'un moyen de compaction **46** approprié. La compaction peut être réalisée sous atmosphère contrôlée et pour des températures comprises entre la température ambiante et la température de fusion des matériaux déposés.

La représentation de la figure 18a est intéressante pour la fabrication de dépôts de matériaux actifs sur des collecteurs de courant servant à réaliser des électrodes de batterie. Cependant, on peut se limiter à revêtir qu'une seule face du substrat. Aussi, la figure 18b représente un dispositif pour réaliser un revêtement sur une seule face conductrice, sans densification mécanique.

Par ailleurs cette technique de dépôts permet un recouvrement parfait de la surface quelle que soit sa géométrie, la présence de défauts d'aspérité. Elle permet par conséquent de garantir les propriétés diélectriques du dépôt.

L'absence de contacts mécaniques permet de réaliser ces dépôts sur des surfaces extrêmement larges. En effet, avec des techniques de dépôts connues comme le roll coat, doctor blade etc. il est difficile de garantir une parfaite homogénéité d'épaisseur sur des substrats larges, ce qui fait que lignes de revêtement sont souvent limitées en largeur. A titre d'exemple, lorsque l'on souhaite réaliser des dépôts de batteries Li-ion de puissance, autrement dit des dépôts de fines épaisseurs, la largeur maximale de bande se situe aux alentours de 200 à 300 mm, ce qui limite fortement la capacité de production des lignes de revêtement selon l'état de la technique.

Lorsque des matériaux peu ou pas conducteurs électriques sont déposés sur la surface d'un substrat, les éventuelles zones moins bien revêtues, sont plus conductrices et concentrent ainsi localement une vitesse de dépôt plus importante qui tend à compenser voir effacer le défaut. Les dépôts obtenus sont ainsi intrinsèquement d'excellente qualité, avec peu de défauts et très homogènes.

Le diagramme de la figure 17 présente un mode de réalisation typique du procédé selon l'invention :

1° étape: Préparation des suspensions. Dans une première étape nous utilisons des poudres de la composition chimique du revêtement (de la couche mince) souhaitée.

2° étape : Immersion d'un substrat métallique dans la suspension colloïdale. La suspension colloïdale peut recouvrir la totalité de la surface du substrat. Dans un mode de réalisation particulier, un masque peut être appliqué sur la surface du substrat de manière à limiter la surface en contact de la suspension et par voie de conséquence réduire la surface de dépôt.

3° étape : Application d'un champ électrique entre le substrat et une contre électrode située dans la suspension colloïdale. Ce champ électrique peut être constant et / ou variable (alternatif). Le sens moyen du champ électrique, c'est-à-dire du potentiel appliqué aux électrodes est adapté à la charge de la particule à déposer (cataphorèse ou anaphorèse).

4° étape : Les conditions de séchage dépendent de l'épaisseur déposée ainsi que de la nature du solvant.

5° étape : densification du dépôt.

*Densification du dépôt*

Avantageusement, les couches déposées sont densifiées, afin de minimiser les cavités, pores, fissures et autres défauts de compacité. Cette étape de densification du dépôt peut être réalisée :

- par un moyen mécanique, en particulier par compression isostatique. La pression appliquée est de préférence comprise entre 30 et 100 MPa; une valeur de l'ordre de 50 MPa donne de très bons résultats ; Dans d'autres modes de réalisation la pression appliquée est supérieure à 250 MPa, voire supérieure à 400 MPa.

- par un traitement thermique. La température dépend fortement de la composition chimique des poudres déposées. Selon la nature des matériaux déposés, il peut être utile par ailleurs de maintenir une atmosphère contrôlée afin d'éviter l'oxydation du revêtement ;

- par une combinaison de moyens thermiques et mécaniques, en particulier par frittage sous pression ;

Le substrat des couches minces des batteries est composé d'un matériau conducteur électrique généralement métallique. Lorsque le substrat est métallique, on préfère éviter de le chauffer à des températures élevées lors de la fabrication de la batterie, afin d'éviter tout risque d'oxydation et de détérioration des propriétés de surfaces. La réduction de l'oxydation de surface est particulièrement bénéfique pour diminuer des résistances de contact électrique, point essentiel au fonctionnement de dispositifs de stockage et/ou production d'énergie.

L'obtention de couches électrophorétiques de très bonne qualité tel que décrit ci-dessus, et en particulier de couches compactes, permet de réduire la durée et la température des traitements thermiques et de limiter le retreint de ces traitements, et d'obtenir une structure nanocristalline homogène Ceci contribue à l'obtention de couches denses sans défauts.

L'inventeur a constaté que plus la taille des particules déposées diminue, plus la température du traitement thermique peut être diminuée. Il est ainsi possible de réaliser des dépôts en couches minces, ou relativement épaisses, avec des taux de porosité inférieure à 5% voire 2% sans avoir recours à des températures et/ou durées de traitement thermiques importants. Par ailleurs, cette technologie de compaction des dépôts à faible température réduit considérablement les risques de rétreint. Aussi, il n'est plus nécessaire d'avoir recours à des cycles de traitement thermique très complexes et coûteux pour consolider les dépôts de céramiques des films d'électrodes et d'électrolyte des batteries.

Durant la phase de densification mécanique et/ou thermique il peut être avantageux de travailler sous vide, ou sous atmosphère inerte afin d'éviter l'apparition de pollution sur les surfaces des particules qui pourraient nuire au mécanisme de densification des particules entre elles.

Pour des tailles de particules telles que celles utilisées dans le procédé selon l'invention, c'est l'augmentation des énergies de surface qui devient la principale force motrice de la densification par traitement thermique; cela se traduit par une forte baisse des températures de densification lorsque la taille des particules diminue. Cependant, pour que cette réduction des températures de consolidation soit effective, il peut être nécessaire que les particules soient au préalable compactées mécaniquement, et/ou déposées avec un empilement compact. Dans ce cas, la multiplication des contacts mécaniques entre ces particules permet de faciliter les processus diffusionnels à l'origine de la densification. Aussi, pour compacter les dépôts, des pressages sont généralement appliqués. Cette technique de compaction par pressage (calandrage) est bien adaptée aux dépôts constitués de particules de tailles microniques ou supérieures.

La présence d'agglomérats, de cavités inter-agglomérats influence également la densification. Plus leurs tailles augmentent, plus la distance de diffusion augmente et plus la température de densification est élevée pour obtenir une bonne densification.

Ainsi, avec des nanoparticules déposées par électrophorèse on peut s'approcher de la densité théorique géométrique d'un empilement compact de sphères (74%), sans étape de compaction mécanique.

Un tel résultat n'est pas possible par les techniques d'encrage. Le dépôt de nanoparticules par la technique des encres mentionnée ci-dessus est très difficile en couche mince car la diminution de la taille des particules conduit à l'augmentation de la viscosité des suspensions. Il faut alors diminuer l'extrait sec en augmentant la proportion de solvant ; on observe alors que l'élimination d'une grande quantité de solvant des couches crues induit des pores et cavités, qu'il sera quasiment impossible de colmater sans avoir recours à des températures et/ou pressions extrêmes.

La forte compacité du dépôt obtenu par électrophorèse, et la faible quantité de solvant à évaporer limite très sensiblement le risque d'apparition de fissures après séchage. Par ailleurs, la faible taille des particules, leur grande surface spécifique tend à faciliter les étapes de consolidation par un traitement thermique (appelé parfois dans ce contexte : « frittage »). La densification du dépôt peut ainsi être réalisée à des températures ne dépassant pas de $0,7T_f$, voire $0,5T_f$ ou $0,3T_f$ où $T_f$ est la température de fusion ou de décomposition (exprimée en °C) du matériau massif de composition chimique identique à celle de la particule déposée. Lorsque plusieurs particules sont co-déposées, il s'agit de considérer la plus fusible des deux. Pour réduire encore cette température de densification, il est également possible d'appliquer une compression mécanique à ce dépôt afin d'accroitre davantage sa compacité, et/ou créer des défauts ponctuels qui vont contribuer à accélérer le processus de densification, d'obtention de couches minces sans porosités.

Un tel procédé de fabrication de couches minces peut être utilisé directement sur des substrats comme des feuillards en aluminium, ayant de faibles températures de fusion.

Les nanoparticules étant très sensibles aux pollutions de surfaces, il est cependant préférable de réaliser ces traitements de consolidation sous vide, ou bien sous atmosphère inerte.

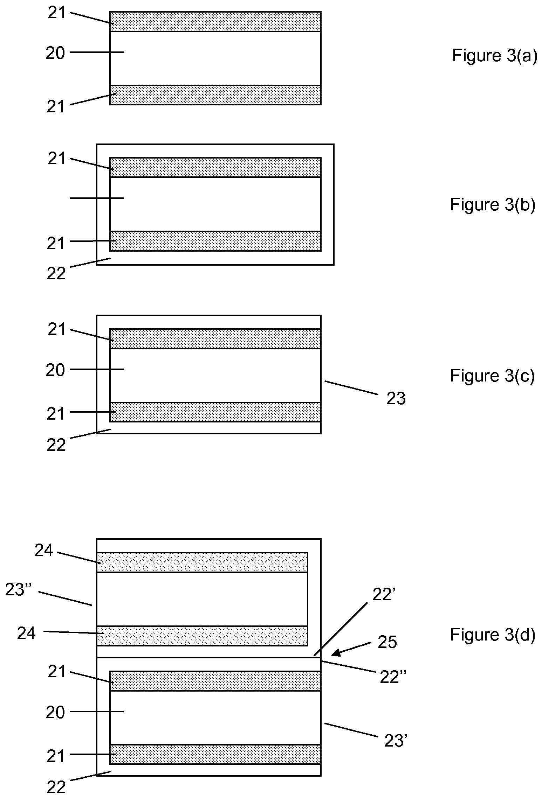

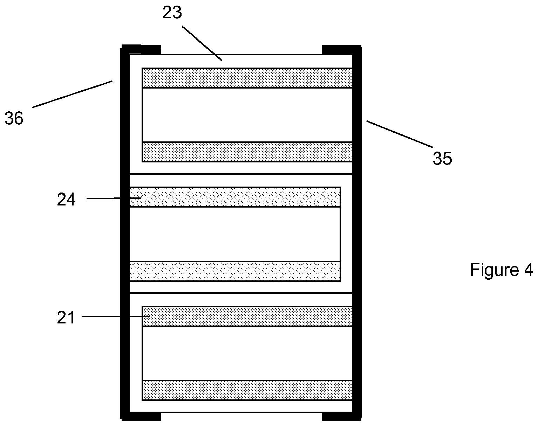

La figure 22 montre de manière schématique les étapes de fabrication d'une batterie selon l'invention par un mode de réalisation du procédé selon l'invention ; le produit obtenu à chaque étape est montré de manière schématique sur les figures 3(a) à 3(d) et 4. Aux étapes 1.A et 1.B on dépose par électrophorèse un film de cathode **24** et d'anode **21,** respectivement, sur le substrat conducteur **20.** Comme montré sur la figure 3(a) pour l'anode **21,** ce dépôt peut être effectué sur les deux faces du substrat conducteur. Aux étapes 2.A et 2.B on sèche le film déposé par électrophorèse. Aux étapes 3.A et 3.B on le densifie par un moyen mécanique et/ou thermique. Cette densification mécanique permet d'obtenir une densité supérieure à 90% de la densité théorique du corps massif, voire supérieure à 95%. Le séchage peut être fait avant ou après la densification mécanique.

A ce stade, il est important de rappeler qu'avec les techniques électrophorétiques, il est possible d'obtenir des dépôts ayant une très bonne compacité de départ. Ainsi, un tel dépôt ne présente qu'un faible retreint lors de la densification et donc peu ou pas de défauts dans les films, même lorsqu'ils sont réalisés sur de larges surfaces et fortes épaisseurs. Par ailleurs, cette étape de densification se fera d'autant plus facilement à faible température, pour des temps courts, que le film de départ sera compact avec des particules de faibles dimensions. Pour accroitre davantage la compacité avant frittage, il est avantageux d'utiliser des particules de faibles dimensions (<30 nm) et/ou de formes parallélépipédiques.

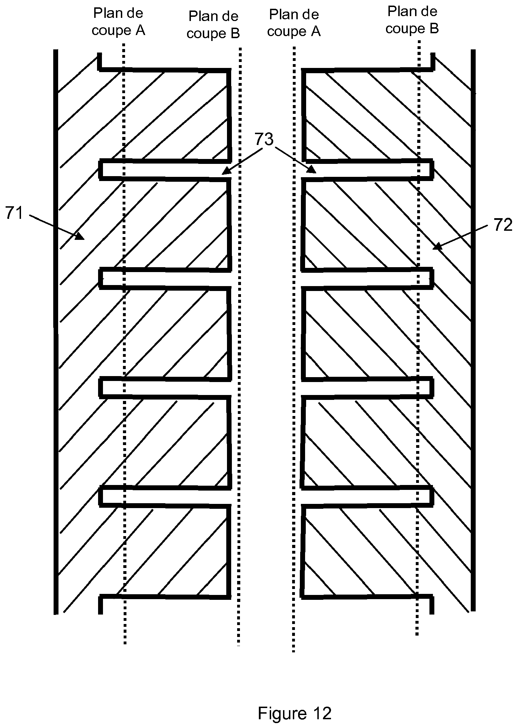

Aux étapes 4.A et 4.B, on dépose sur l'anode **21** et sur la cathode **24,** respectivement, le film d'électrolyte **22.** Son épaisseur peut être de l'ordre de 1 $\mu$m. Ce dépôt recouvre également les bords (i.e. les tranches) des électrodes, comme montré de manière schématique sur la figure 3(b), voire aussi la figure 12b. Cette isolation des bords des électrodes évite à la fois le risque de court-circuit et le risque de courants de fuite. Aux étapes 5.A et 5.B bis on sèche ce dépôt d'électrolyte.

Aux étapes 6.A et 6.B, on découpe un bord des électrodes comme le montre la figure 12. De manière avantageuse, on découpe le bord lié à la bande, afin de laisser trois arêtes revêtues d'électrolyte sur la tranche. Cet électrolyte étant un diélectrique, il permettra lors de la prochaine étape d'empilement de ne faire apparaître que les contacts anodiques d'un côté de la cellule, respectivement cathodiques sur l'autre, afin de réaliser des assemblages en parallèle des éléments de batterie afin de constituer une cellule batterie de plus forte capacité. La figure 3(c) montre schématiquement une telle section de cellule après découpe : le substrat **20** a été revêtu (ici sur les deux faces) d'un film de cathode **21** et coupé sur une tranche **23.** A l'étape 7 on réalise l'empilement de manière à ce que sur deux côtés opposés de l'empilement on trouve alternativement une succession de bords **23'** d'anode **21** découpée et de bords de cathode **24** revêtu d'électrolyte **22.** La figure 4 montre un empilement de deux substrats **20,** l'un portant sur les deux faces un film d'anode **21,** l'autre un film de cathode **24,** les deux faces du film d'électrolyte **22',22"** étant posée l'une sur l'autre pour former une interface commune **25.** A l'étape 8 cet empilement peut être densifié afin d'obtenir une bonne liaison (« soudure ») entre les deux faces **22',22"** de la couche d'électrolyte **22.** Si la température de fusion des couches d'anode et de cathode est significativement supérieure à celle de la couche d'électrolyte, il est préférable d'effectuer la densification thermique les couches d'anode et de cathode séparément, avant l'empilage, puis d'effectuer une densification thermique de l'empilement pour densifier la couche d'électrolyte.

Une fois l'empilement réalisé, des terminaisons (contacts électriques) **35,36** sont ajoutés au niveau où les collecteurs de courant cathodiques, respectivement anodiques sont apparents (non revêtus d'électrolyte isolant). Ces zones de contact peuvent être sur les côtés opposés de l'empilement pour collecter de courant ainsi que cela est représenté sur la figure 4, mais également sur les mêmes cotés ou sur des cotés adjacents.

Dans un mode de réalisation particulier, l'empilement illustré sur la figure 4 est réalisé par enroulement de deux demi-électrodes (dont une est montrée sur la figure 3(c)) entre elles sur un mandrin afin d'obtenir une cellule forme cylindrique. Comme pour la configuration de la figure 4, les connexions anodiques sortent alors d'un côté, alors que les connexions cathodiques sortent de l'autre côte.

Sur toutes les figures qui suivent seules deux cellules sont représentées dans les empilements, mais il est évident que le nombre de cellules empilées peut être beaucoup plus important.

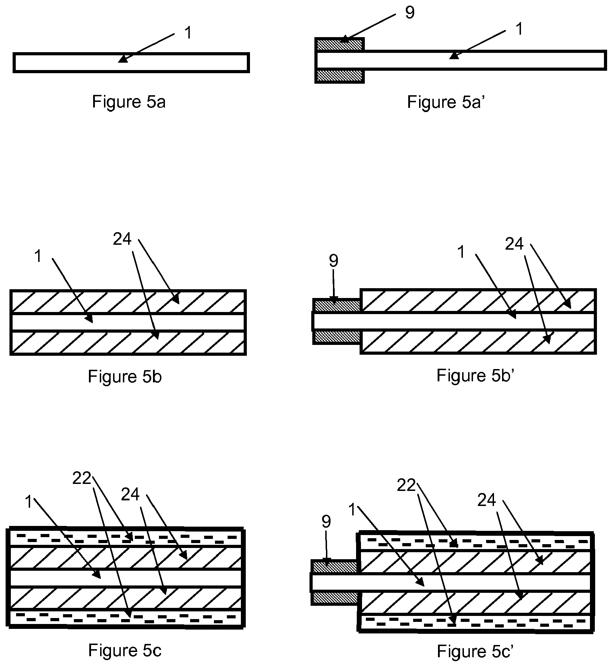

Les figures 5a à 5c' illustrent les différentes étapes d'un dépôt par électrophorèse selon l'invention.

La figure 5a représente l'approvisionnement d'un substrat, ici sous forme de feuillard métallique 1, correspondant à l'étape d) du mode de réalisation principal de l'invention.

La figure 5a' représente l'approvisionnement d'un substrat, ici sous forme de feuillard métallique 1, correspondant à l'étape d) du mode de réalisation principal de l'invention, dans cette étape une protection partielle de la surface du substrat 1 à l'aide d'un masque isolant 9 est réalisée. Ce masque peut être un film polymère strippable, ou un masque souple isolant (stencil).

Les figures 5b et 5b' représentent le dépôt par électrophorèse des nanoparticules de cathode 24 sur les parties conductrices du substrat 1 correspondant à l'étape e) d'un mode de réalisation principal du procédé, suivi d'une densification du revêtement. Sur la figure 5b le dépôt se fait sur toute la surface, et sur les deux faces, du substrat 1, alors que sur la figure 5b' une partie du substrat est protégée par le masque isolant 9.

Les figures 5c et 5c' représentent un dépôt par électrophorèse des nanoparticules d'électrolyte sur la cathode correspondant à l'étape g) d'un mode de réalisation principal du procédé.

Le produit obtenu par le procédé selon les figures 5a à 5c' correspond au cas où le substrat est approvisionné sous forme de bande, et des plaques de substrat revêtu de cathode et d'électrolyte sont ensuite découpées dans la bande.

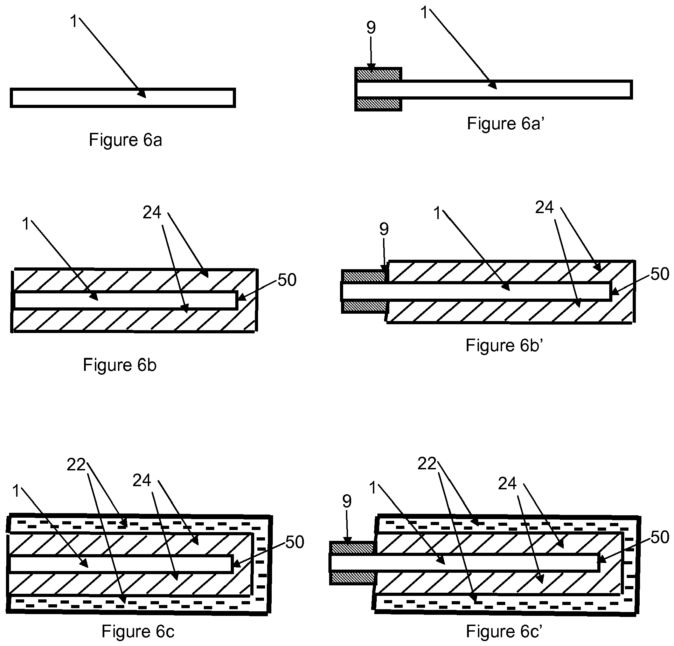

Les figures 6a à 6c' représentent des produits identiques à ceux des figures 5a à 5c', hormis que la couche de cathode et la couche d'électrolyte recouvrent en plus une tranche du substrat. Ce produit est obtenu en partant d'une plaque de substrat 1 prédécoupée sur laquelle sont déposées les couches de cathode puis d'électrolyte.

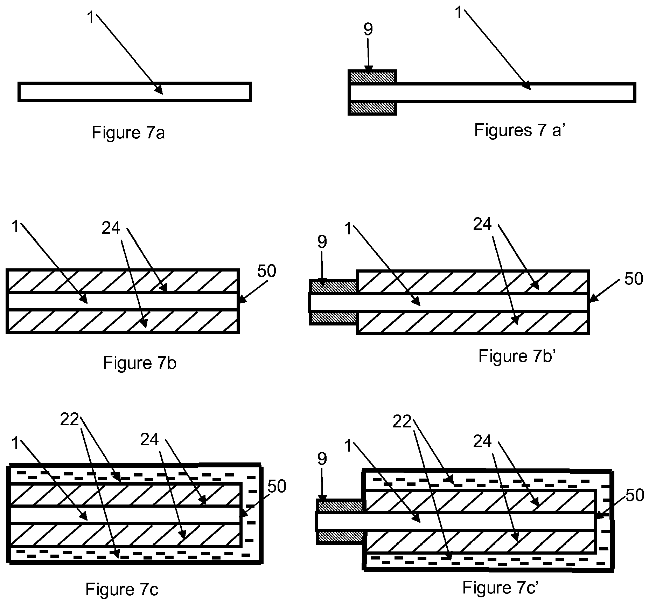

Les figures 7a à 7c' représentent des produits identiques à ceux des figures 5a à 5c', hormis que la couche d'électrolyte recouvre en plus une tranche du substrat. Dans ce mode de réalisation, le dépôt par électrophorèse des nanoparticules de cathode se fait sur une bande qui est ensuite découpée, l'électrolyte est déposé après découpe.

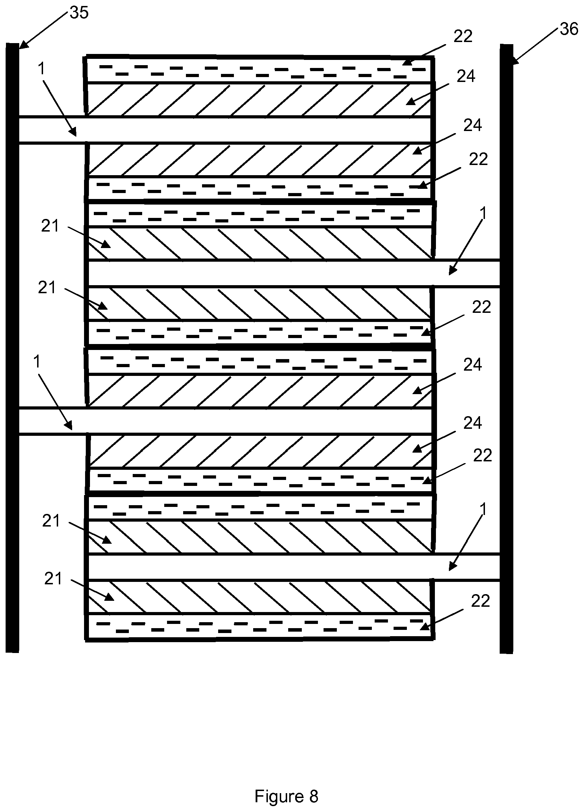

La figure 8 montre une batterie obtenue à l'issue du procédé selon l'invention. Cette batterie est constituée d'empilements électrolyte **22** /anode **21** / substrat **1** / anode **21** / électrolyte **22** et électrolyte **22** /cathode **24** /substrat **1** /cathode **24** /électrolyte **22,** assemblés au niveau de leurs couches d'électrolyte. Dans la batterie représentée sur cette figure, pour limiter les risques de court-circuit sur les bords d'électrodes, les terminaisons sont reprises uniquement sur les extrémités des substrats non revêtus car protégés par un masque isolant pendant le dépôt.

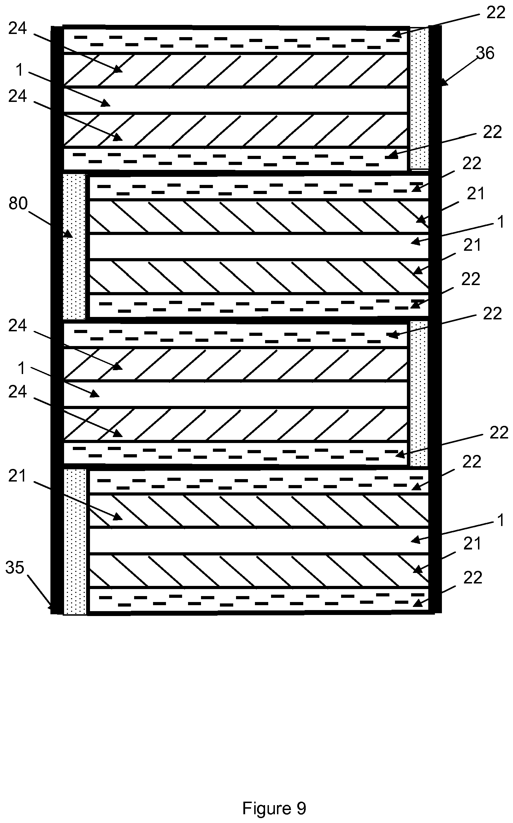

La figure 9 montre une batterie obtenue à l'issue du procédé selon l'invention. Cette batterie est constituée d'empilements électrolyte **22** /anode **21** / substrat **1** / anode **21** / électrolyte **22** et électrolyte **22** /cathode **24** /substrat **1** /cathode **24** /électrolyte **22,** assemblés au niveau de leurs couches d'électrolyte. Dans la batterie représentée sur cette figure, pour limiter les risques de court-circuit sur les bords d'électrodes, les terminaisons sont prises sur les bords d'électrodes légèrement décalées.

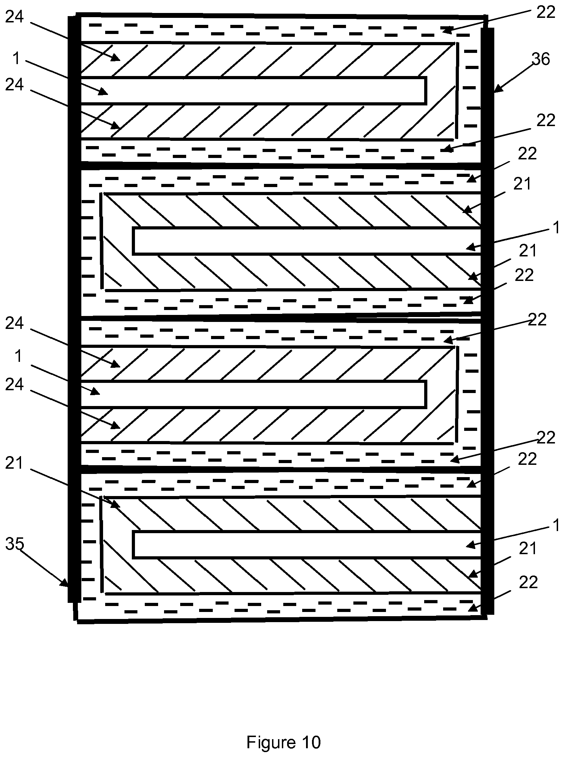

La figure 10 montre une batterie obtenue à l'issue du procédé selon l'invention. Cette batterie est constituée d'empilements électrolyte **22** /anode **21** / substrat **1** / anode **21** / électrolyte **22** et électrolyte **22** /cathode **24** /substrat **1** /cathode **24** /électrolyte **22,** assemblés au niveau de leurs couches d'électrolyte. Dans la batterie représentée sur cette figure, une partie ou la totalité des tranches de chaque empilement est recouverte de matériaux d'anode ou de cathode, d'électrolyte. Ceci permet de reprendre les contacts par appui d'un collecteur de courant sur les zones des tranches non recouvertes.

La figure 11 représente une batterie construite selon un mode de réalisation similaire à celui de la figure 10, hormis que les empilements sont construits selon le mode de réalisation des figures 7a à 7c'.

Dans les modes de réalisation représentés par les figures 8 à 11, la batterie est un composant tridimensionnel multi-couche. Ce type de composant est souvent destiné à être monté en surface de circuits intégrés par des techniques de type "pick and place". Cette batterie en couches minces entièrement solide peut être fabriquée selon les standards dimensionnels définis par l'Electronic Industries Alliance.

La forte densité d'énergie et de puissance volumique obtenue avec les batteries des figures 8 à 11 est due à l'absence de substrat et à la présence en grande quantité de batteries empilées et connectés en parallèle.

Cette architecture de composant tridimensionnel est d'autant plus performante que le composant n'est pas intégré dans un boîtier, cependant il peut être nécessaire de protéger l'empilement multicouche de l'humidité de l'air et de l'oxydation afin de ne pas dégrader ses performances au cours du temps et d'augmenter sa durée de vie. La Figure 25 représente un mode de réalisation d'une batterie en couches minces entièrement solide selon la figure 11, avec une structure multicouche, comprenant en outre des éléments de protection **80,81,82,83.**

Comme le montre la figure 25, pour obtenir une protection de la cellule par rapport aux éléments atmosphériques, un film de protection **80** améliore la protection offerte par le film d'électrolyte sur les bords supérieur et inférieur de la batterie.

Cette protection est placée sur le dessus et le dessous de la batterie, généralement sous la forme d'un film **80**. L'épaisseur et la nature du film de protection sont déterminées par les valeurs de perméabilité que l'on souhaite obtenir. La valeur de perméabilité recherchée pour le film de protection est en particulier fonction du caractère protecteur du film d'électrolyte **22** situé en dessous. D'une manière générale, pour garantir la durée de vie de la batterie, une perméabilité inférieure à 0,1 $\mu$g/m$^2$/jour d'exposition à l'air est nécessaire. Parmi les résines pouvant être utilisées pour réaliser ce film de protection on peut citer, de manière non limitative, les résines époxy, polyuréthanes, acryliques, polypropylène, polyéthylène, polyester (polyéthylène téréphtalate, polyéthylène naphtalate). Ces résines peuvent être polymérisables sous UV comme par exemple les résines de type HumiSeal® UV40 de la société Humiseal.

Le film de protection **80** est déposé sur le dessus et le dessous de la batterie. Les tranches des électrodes ne sont pas protégées par ce film **80.** Elles restent en contact potentiel avec les éléments de l'atmosphère susceptibles de détériorer les performances dans les temps.

Pour protéger ces tranches situées sur les côtés de la batterie tout en assurant la connexion électrique, ces côtés sont recouverts d'un revêtement contenant des éléments métalliques **81,82,83,** les revêtements dépassant de préférence légèrement aux extrémités **84,** de manière à venir recouvrir les films de polymères 80 et garantissant ainsi une protection optimale de la batterie.

Dans certains modes de réalisation (non représentés), ces terminaisons (revêtements contenant des éléments métalliques) peuvent être réalisées sous forme d'une seule couche métallique 83, d'étain par exemple,

Dans un mode de réalisation préférentiel, elles peuvent être constituées de multicouches **81,82,83** comme le montre la figure 25. Les différentes couches **81,82,83** sont respectivement, de manière non limitative, une couche de polymère conducteur (tel qu'une résine chargée à l'argent), une couche de nickel et une couche d'étain.

Outre leur rôle de protection contre la détérioration par les gaz atmosphériques, les différentes couches ont chacune une fonction particulière. La couche d'étain **83** permet d'assurer la soudabilité de l'interface de la batterie. La couche de nickel **82** protège la couche de polymère **81** pendant les étapes d'assemblage par soudure. Dans certains modes de réalisation, une sous-couche de cuivre (non représentée) est en outre déposée sous la couche de polymère conducteur.

La couche de polymère conducteur **81** étant déformable, elle peut absorber les éventuelles déformations que subit la batterie soudée sur un circuit électronique si ledit circuit est lui-même soumis à des déformations. Cette couche conductrice relativement souple permet ainsi d'éviter d'éventuelles ruptures aux niveaux des interfaces sollicitées mécaniquement. En outre, les matériaux à insertion de lithium préférentiellement utilisés pour la fabrication de la batterie, même s'ils sont considérés comme dimensionnellement stables, possèdent un certain taux de déformation en fonction de leur taux d'insertion (par exemple 1% pour le $Li_4Ti_5O_{12}$ en comparaison du $Li_7Ti_5O_{12}$). Ainsi, la couche 81 permet de fiabiliser les contacts électriques en absorbant les déformations pendant les étapes d'insertion et de désinsertion des matériaux d'électrode.

Les terminaisons ainsi réalisées et constituées de plusieurs couches protègent les tranches des électrodes.

Dans certains modes de réalisation avantageux, les dépôts de film polymère et des terminaisons sont réalisés dans une atmosphère totalement sèche (i.e. avec un point de rosée de préférence inférieur à -50°C), et à une température ambiante régulée à environ 20°C. En effet, pour garantir la durée de vie de la batterie, il faut non seulement que les films de protection et les terminaisons aient des propriétés de barrières vis à vis des gaz de l'atmosphère, mais il faut également qu'aucune trace d'humidité ne soit piégée sous ces revêtements pendant les étapes de fabrication.

D'autre part, il est possible de souder des connectiques différentes sur les extrémités des batteries sous forme de chips. Ces connectiques peuvent être montées dans une dernière étape de fabrication par brasage (comme pour le brasage par refusions = solder reflow), dans un four à passage, par infrarouge, ou en phase vapeur. Ainsi, sans avoir besoin d'investir dans de nouveaux masques de fabrication, sans changer les gammes de fabrication, il est possible de différencier au dernier moment les interfaces des composants. Leur connectique peut alors être sous forme de fils, de languettes, ou autre.

Enfin, cette architecture de batterie en couches minces tridimensionnelle ne contient pas de lithium métallique ni d'électrolytes organiques, elle peut donc être testée avant montage sur la carte, et être soudée sans risque de détérioration si elle se trouve dans un état partiellement chargé ou déchargé.

La protection de la batterie est décrite ci-dessus en relation à la batterie de la figure 25, toutefois ce type de protection peut également être utilisé pour les modes de réalisation des figures 8,9,10,11. Éventuellement, le film de polymère **80** peut recouvrir également les côtés des empilements. Cela peut être utile en particulier dans les modes de réalisation des batteries des figures 8 et 9 pour lesquelles les tranches des électrodes ne sont pas ou mal recouvertes d'électrolyte.

La figure 12 illustre un mode de réalisation des découpes sur des bandes d'anode **72** et de cathode **71,** comprenant chacune des créneaux **73,** ainsi que leur empilement pour réaliser par la suite des cellules batteries. Les bandes en créneau d'anode et de cathode sont superposées l'une sur l'autre de manière à faire coïncider les plans de découpe A et B entre eux. Une fois les découpes réalisées, on obtient des empilements alternés tels que représentés sur la figure 11.

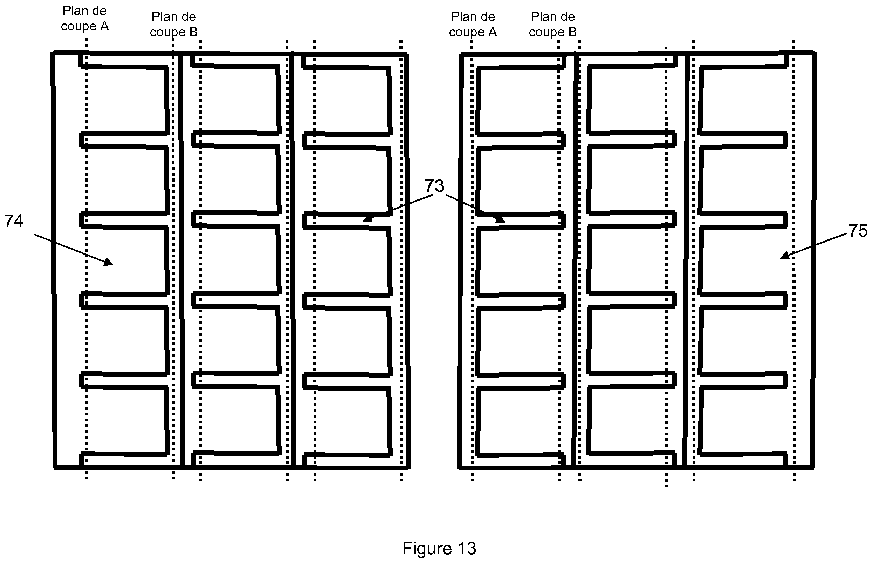

La figure 13 illustre une adaptation des découpes de la figure 12 pour un travail en plaques. Les hachures ne sont pas représentées pour des raisons de lisibilité. De la même manière, les plaques anodiques **74** et cathodiques **75** revêtues de film d'électrolyte sont empilées avec les découpes en tête bêche pour faire coïncider les plans de découpe A et B entre eux.

Pour chacun des modes de réalisation des figures 5 à 13, le feuillard de substrat métallique peut être remplacé par film de polymère métallisé, le film étant « strippable », c'est-à-dire qu'il peut être dissous dans une solution appropriée, ou pelable.

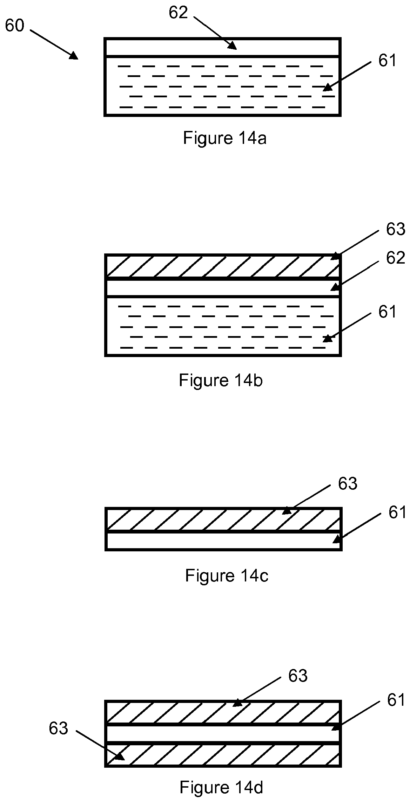

La figure 14a représente l'approvisionnement d'un substrat **60,** ici sous forme de film polymère « strippable » **61** revêtu d'une couche métallique **62,** correspondant à 'étape d) du mode de réalisation principal de l'invention.

La figure 14b représente le dépôt par électrophorèse des nanoparticules de cathode **63** sur les parties conductrices du substrat **60** correspondant à l'étape e) d'un mode de réalisation principal du procédé

La figure 14c représente le strippage (ou pelage) du film polymère.

La figure 14d représente le dépôt des nanoparticules de cathode **63** sur la couche métallique **62** mise à nu dans l'étape de la figure 14c.

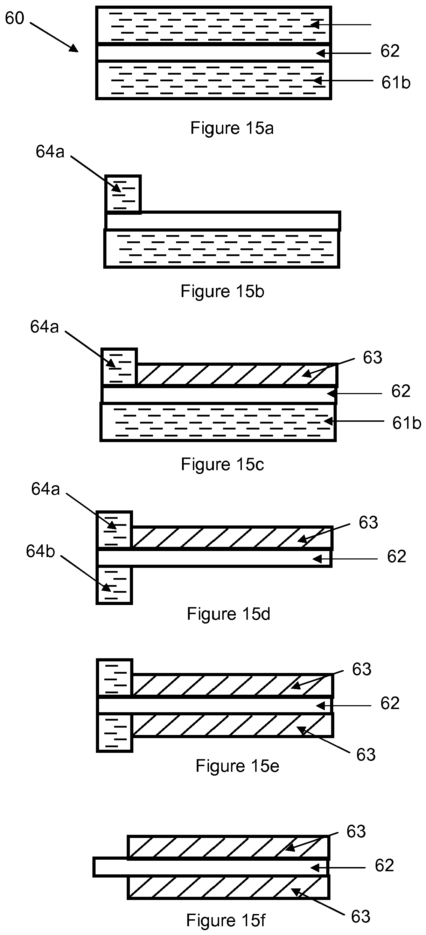

La figure 15a représente l'approvisionnement d'un substrat **60,** ici sous forme d'un film métallique 62 revêtu sur ses deux faces d'un film de résine polymère photosensible **61a, 61b,** correspondant à l'étape d) du mode de réalisation principal de l'invention.

La figure 15b représente l'épargne réalisée avec le polymère **61a** partiellement insolé et développé sur l'une des faces du film métallique **62,** avec réalisation d'une épargne **64a.**

La figure 15c représente le dépôt par électrophorèse des nanoparticules de cathode **63** sur les parties conductrices du substrat **60** (partie non recouverte de polymère ou résine photosensible) correspondant à l'étape e) d'un mode de réalisation principal du procédé.

La figure 15d représente l'épargne réalisée avec le polymère **61b** partiellement insolé et développé sur l'autre face du film métallique **62,** avec réalisation d'une épargne **64b.**

La figure 15e représente le dépôt par électrophorèse des nanoparticules de cathode 63 sur les parties conductrices du substrat **60** (partie du film métallique **62** non recouverte de polymère ou résine photosensible, ni de particules de cathode **63**) correspondant à l'étape e) d'un mode de réalisation principal du procédé.

La figure 15f représente le stripage des épargnes **64a, 64b.**

La figure 16a représente l'approvisionnement d'un substrat, ici sous forme d'une plaque isolante **65** revêtue partiellement de films métalliques **68a, 68b** correspondant à l'étape d) du mode de réalisation principal de l'invention.

La figure 16b représente le dépôt par électrophorèse des nanoparticules de cathode **63** sur la partie métallique du substrat **68a** correspondant à l'étape e) d'un mode de réalisation principal du procédé.

La figure 16c représente le dépôt par électrophorèse des nanoparticules d'électrolyte **66** sur la partie métallique du substrat **68a** recouverte de cathode **63,** correspondant à l'étape f) d'un mode de réalisation principal du procédé.

La figure 16d représente une vue en coupe de la batterie après dépôt du film mince d'anode.

La figure 20 représente le dépôt compact de nanoparticules de tailles non-homogènes **2, 17.** Un tel empilement pouvant être obtenu directement par co-dépôt d'un mélange de nanoparticules de tailles différentes ou par dépôt successifs de particules de tailles différentes.

La figure 21a représente le chemin de diffusion du lithium dans un empilement compact de particules imprégné d'électrolyte. Il existe une zone de contact surfacique **76** entre les particules et l'électrolyte contenu dans les porosités. Le chemin de diffusion peu résistif. Il existe également une zone de contact ponctuel **77** entre les particules. La diffusion du lithium sur ce contact ponctuel est limitée.

La figure 21b représente l'évolution de l'interface entre les particules pendant la consolidation. Le chemin de diffusion **78** peut être assuré en phase solide, sans recours à un électrolyte liquide dans les porosités

La figure 21c représente la structure obtenue après densification d'un dépôt composite contenant une phase «fusible» **79.**

La figure 21d montre de manière schématique l'influence de la densification sur le type de porosité. Ce point peut illustrer et expliquer que les batteries selon l'invention aient des porosités inférieure à 30%. A ce niveau, elles sont fermées et ne peuvent plus être imprégnées d'électrolyte.

Plus la porosité est faible meilleures seront les performances (Wh/l, Wh/kg) si en la batterie est en couches minces.

L'électrophorèse permet de déposer des couches de compositions difficiles voire impossibles à obtenir par voie sous vide ; par exemple, on peut incorporer des polymères dans une phase minérale, ou déposer des composés de type spinelle ($LiMn_2O_4$) ou olivine ($LiMPO_4$ où M représente avantageusement Fe, Co ou Mn) difficilement accessibles par dépôt sous vide.

Les batteries susceptibles d'être obtenues par le procédé selon l'invention se distinguent des batteries connues par plusieurs particularités structurelles. L'électrolyte est entièrement solide. Les couches peuvent présenter une composition qui ne peut pas être obtenue par dépôt sous vide. Le taux de porosité des couches d'anode, de cathode et d'électrolyte solide, exprimé par le rapport entre la densité réelle et la densité théorique des couches, est faible et peut atteindre des valeurs inférieures à 10% voire 5%, alors que les procédés connus conduisent à un taux de porosité qui reste en général supérieur à 20%. La taille des grains peut être beaucoup plus faible que dans les batteries à couches minces déposées par des encres, car la couche déposée par électrophorèse est plus dense, même avant densification. Compte tenu de la densification à température relativement basse, les couches peuvent incorporer des polymères.

Avantageusement, dans les batteries selon l'invention, tous les collecteurs peuvent être en aluminium, qui est moins coûteux que le cuivre ou l'argent. Dans les batteries selon l'état de la technique, l'utilisation de l'aluminium n'est souvent pas possible ou limité à la cathode, soit parce que leur fabrication implique des températures trop élevées par rapport au point de fusion de l'aluminium soit parce que un collecteur en aluminium risquerait d'être corrodé par les sels de lithium contenus dans les électrolytes et par les tensions extrêmes auxquels sont soumis les collecteurs dans les batteries. Le fait de n'employer au sein d'une même batterie qu'un seul matériau pour les collecteurs facilite leur recyclage.

Une autre caractéristique structurelle des batteries selon l'invention est que la couche d'électrolyte recouvre, au moins sur un côté, une partie de la tranche des couches d'anodes et de cathode.

Une dernière caractéristique structurelle des batteries selon l'invention est leur stabilité dimensionnelle pendant leur utilisation : certains matériaux d'électrode (notamment les spinelles, Le $Li_4Ti_5O_{12}$, les olivines), qui ne sont difficilement accessibles par dépôt sous vide, l'insertion du lithium ne conduit pas de variations de volume. Cela améliore la durée de vie de batteries, surtout de celles fabriquées par empilement de plusieurs structures « collecteur / anode / électrolyte / cathode / collecteur ».

L'invention présente de nombreux avantages. Le procédé de fabrication des couches d'anode, d'électrolyte solide et de cathode par électrophorèse est simple, rapide, peu onéreux. Le procédé n'a pas besoin d'être mise en oeuvre dans une atmosphère sèche, contrairement aux procédés selon l'état de la technique mettant en oeuvre des sels de lithium ou de lithium métallique, très sensibles à l'humidité. Les batteries obtenues présentent une forte densité de puissance ; elles présentent également une forte densité d'énergie (environ deux fois plus que les batteries à ions de lithium connues) dû au très faible taux de porosité et à la faible épaisseur des films d'électrolyte. L'absence de sels de lithium corrosifs améliore la durée de vie de la batterie, diminue le risque de court-circuit interne et améliore également sa résistance à la température ; de ce fait, les batteries selon l'invention peuvent subir une opération de soudage à la vague, contrairement aux batteries à ions de lithium en couches minces connus. Ainsi, les batteries selon l'invention présentent un meilleur niveau de sécurité. Par ailleurs, leur taux d'autodécharge est plus faible, car la couche d'électrolyte recouvre les bords des électrodes.

Exemples

Le procédé selon l'invention peut être mis en oeuvre de la manière suivante.

Exemple 1 - fabrication d'une batterie en couches minces

1- Préparation de la suspension colloïdale SP+

Pour obtenir la suspension SP+ de particules P+ de matériau de cathode, on synthétise une poudre de $LiMn_2O_4$ constituée d'amas de nanoparticules. Pour cela on utilise la méthode de Pechini décrite dans l'article « Synthesis and Electrochemical Studies of Spinel Phase LiMn2O4 Cathode Materials Prepared by the Pechini Process », W. Liu, G.C. Farrington, F. Chaput, B. Dunn, J. Electrochem. Soc., vol.143, No.3, 1996.. Après l'étape de calcination à 600°C, la poudre contient des amas dont la taille est comprise entre 50 nm et 100 nm.

Cette poudre est ensuite mise en suspension dans l'éthanol à une concentration de 20 g/l.

La suspension SP+ est introduite dans le bol d'un broyeur à billes préalablement rempli de billes en céramiques de diamètre 0,1 mm. Le broyage pendant 2 heures en présence de quelques millilitres d'acide polyacrylique, qui sert d'agent complexant, permet d'obtenir une solution colloïdale présentant des particules ($D_{50}$) dont la taille est égale à 30 nm. Le potentiel zêta de la suspension s'élève à environ 65 mV.

2- Dépôt du film de cathode

Les particules de $LiMn_2O_4$ contenues dans la suspension sont par la suite déposées sur un substrat constitué d'une feuille de cuivre de 100 $\mu$m d'épaisseur. Le dépôt est réalisé en appliquant entre le substrat et une contre-électrode, tous deux immergés dans la suspension colloïdale, une tension de 100 V jusqu'à obtenir un dépôt de 4 $\mu$m d'épaisseur. Ce dépôt est ensuite compacté sous une pression de 500 MPa, séché pendant 1 heure à 90°C avant d'être densifié par un traitement thermique de 500°C, réalisé pendant 1 heure. Le dépôt ainsi obtenu présente une porosité inférieure à 10%

3- Préparation de la suspension colloïdale SP-

Dans un premier temps une poudre de $Li_4Ti_5O_{12}$ constituée d'amas de particules de taille nanométrique est synthétisée selon le procédé décrit dans l'article « Phase-pure nanocrystalline Li4Ti5O12 for a lithium-ion battery » de M. Kalbac et al., J Solid State Elecrtochem (2003) 8 : 2-6. La synthèse s'effectue par mélange sous argon d'une solution de LiOEt à 0,9M et de butoxyde de titane(IV) dans l'éthanol. Le mélange est réalisé avec le rapport stoechiométrique du Li/Ti = 4:5. La solution obtenue est par la suite hydrolysée avec une solution aqueuse à 4% de polyéthylène glycol. Le mélange est ensuite mélangé pendant 11 heures avant d'être évaporé a 40°C jusqu'à obtenir une pâte visqueuse. Après calcination à 500°C, une poudre de $Li_4Ti_5O_{12}$ est obtenue.

Cette poudre est ensuite mise en suspension dans de l'alcool à une concentration de 20 g/l dans laquelle des nanoparticules de noir de carbone ont été ajoutées en faible quantité. La suspension est introduite dans le bol d'un broyeur à billes préalablement rempli de billes en céramiques de diamètre 0,1 mm. Le broyage pendant 3 heures en présence d'acide polyacrylique, qui sert d'agent complexant, permet d'obtenir une solution colloïdale présentant des particules dont la taille ($D_{50}$) égale à environ 40 nm. Le potentiel zêta de la suspension est égal à 60 mV.

4- Dépôt du film d'anode

Les particules de $Li_4Ti_5O_{12}$ et de carbone contenues dans la suspension sont par la suite déposées sur un substrat constitué d'une feuille de cuivre de 100 $\mu$m d'épaisseur. Le dépôt est réalisé en appliquant entre le substrat et une contre-électrode, tous deux immergés dans la suspension colloïdale, une tension de 200 V jusqu'à obtenir un dépôt de 4 $\mu$m d'épaisseur. Ce dépôt est ensuite compacté sous une pression de 500 MPa, séché pendant 1 heure à 90°C avant d'être densifié par un traitement thermique à 450°C, réalisé pendant 2 heures. Le dépôt ainsi obtenu présente une porosité inférieure a 10%.

5- Préparation de la suspension colloïdale SPn

Pour réaliser la suspension colloïdale contenant des particules de l'électrolyte, on synthétise tout d'abord des poudres nanométriques du $Li_{1,3}Al_{0,3}Ti_{1,7}(PO_4)_3$ en utilisant le procédé décrit dans la publication « Thin-film lithium-ion battery derived from Li1,3Al0,3Ti1,7(PO4)3 sintered pellets » par Xiao et al, paru dans Trans. Nonferrous Me. Soc. China 16 (2006), p. 281-285. On dissout en quantité stoechiométrique le $Li(CH_3-COO).2H_2O$ et $Al(NO_3)_3.9H_2O$ dans $CH_3OCH_2CH_2OH$, puis on ajout à ce mélange sous agitation $PO(OC_4H_9)_4$. Après avoir ajouté la quantité stoechiométrique d'eau déminéralisée pour l'hydrolyse des alkoxydes, la suspension obtenue est séchée à 140°C pendant 4 heures pour former un gel de $Li_{1,3}Al_{0,3}Ti_{1,7}(PO_4)_3$. Ce gel est par la suite calciné à 900°C pendant 2 heures et pour obtenir une poudre agglomérée de $Li_{1,3}Al_{0,3}Ti_{1,7}(PO_4)_3$ ; cette poudre est ensuite mise en suspension de l'éthanol avec une concentration égale à 20 g/l.

La suspension est introduite dans le bol d'un broyeur à billes préalablement rempli de billes en céramiques de diamètre 0,1 mm. Le broyage pendant 3 heures en présence d'acide polyacrylique, qui sert d'agent complexant, ce qui permet d'obtenir une solution colloïdale présentant des particules dont la taille $D_{50}$ est égale à 15 nm. Le potentiel zêta de la suspension est de l'ordre de 60 mV

6- Réalisation de la cellule électrochimique

Les particules de $Li_{1,3}Al_{0,3}Ti_{1,7}(PO_4)_3$ obtenues dans la suspension sont par la suite déposées sur le dépôt de $LiMn_2O_4$, densifié, en appliquant entre le substrat et un contre-électrode, tous deux immergés dans la suspension colloïdale, une tension de 100 V jusqu'à obtenir un dépôt de 2 $\mu$m d'épaisseur.

La cathode (LiMn$_2$O$_4$) revêtue du film mince de nanoparticules d'électrolyte (non fritté) est ensuite recouverte par l'anode. L'empilement collecteur+/cathode / électrolyte / anode / collecteur est ensuite comprimé sous 400 MPa puis densifié sous vide à 300°C pendant 30 minutes jusqu'à obtention d'une cellule batterie Li-ion totalement compacte et inorganique.

Exemple 2 : fabrication d'un film d'anode

1- Préparation du substrat

On a approvisionné un feuillard d'aluminium de 15 μm d'épaisseur. Le feuillard est ensuite placé dans un dérouleur, et positionné sur un cadre de maintien, de manière à créer une structure rigide de maintien du feuillard en aluminium sans créer de froissement du feuillard. Ce cadre de maintien est conçu avec une surface externe isolante, mais avec la présence de contacts électriques à l'intérieur. Ces surfaces internes conductrices sont au contact du feuillard en aluminium et permettent de lui imposer un potentiel. Le feuillard d'aluminium dans son cadre est ensuite immergé dans un bain de nettoyage de la surface. Ce nettoyage est réalisé par des immersions dans un bain de lessive de chez NGL technologie sous ultrasons, suivi d'un rinçage à l'eau distillée.

Une fois la surface nettoyée, nous avons effectué un traitement d'électropolissage dans une solution ayant la composition chimique suivante: 80% d'éthanol absolu, 13,8% d'eau distillée, 6,2% d'acide perchlorique à 70%. L'électropolissage de l'aluminium a été réalisé avec une polarisation sous 15V avec une contre-électrode en plomb. Le bain de traitement a été refroidi pour éviter les échauffements liés aux fortes densités de courant.

Après le traitement d'électropolissage, la surface est rincée à l'eau distillée.

2- Préparation d'une suspension colloïdale SP-

Cette suspension colloïdale est réalisée sans ajouts de stabilisants, et ce, afin de garantir un excellent niveau de pureté de l'électrode. Pour cela, nous avons préparé une suspension colloïdale de Li$_4$Ti$_5$O$_{12}$ dans de l'alcool (par exemple éthanol) par broyage dispersion de nanoparticules de Li$_4$Ti$_5$O$_{12}$.

Les nanoparticules de Li$_4$Ti$_5$O$_{12}$ ont été achetées chez Aldrich, puis broyées dans de l'alcool éthylique à une concentration de 10 g/l. Après cette étape de broyage-dispersion la suspension a été passée aux ultrasons puis elle a été laissée décantée. Nous avons prélevé uniquement le surnageant de la suspension après décantation afin d'être certain d'obtenir une suspension colloïdale monodisperse de nanoparticules, sans agglomérats de taille supérieure à 100 nm.

Une suspension ne contenant pas de stabilisant a ainsi été obtenue. En effet, nous avons pu remarquer que la stabilité des nano colloïdes dépendait grandement de la taille des particules et de leur concentration dans la suspension. Lorsque la taille des particules avoisine la dizaine de nanomètres, elles peuvent être stables en suspensions sans ajout de stabilisants. La forte surface spécifique de ces particules et leur faible masse conduit à ce que le bilan des interactions conduit à ce que le système se comporte comme un gaz réel susceptible de se condenser en donnant naissance à un cristal colloïdal. Les dépôts électrophorétiques de ces nanoparticules nous permettent de condenser à la surface du substrat cette phase dite de cristal colloïdal.

3- Dépôt du film d'anode

Les particules de Li$_4$Ti$_5$O$_{12}$ ont été déposées en couche mince par électrophorèse sur le feuillard d'aluminium électro poli obtenu à l'étape 1 ci-dessus.

Les conditions de dépôt utilisées étaient de 10V/cm, ce qui a permis d'obtenir un dépôt compact d'environ 0,5 μm d'épaisseur après seulement trente secondes d'anaphorèse.

Le dépôt a ensuite été recuit à 500°C pendant 1 heure puis pressé sous 50 MPa.

On a ainsi obtenu une anode.

Une courbe de voltampérométrie cyclique a été tracée à 0,1 V/sec. sur cette électrode afin de valider ses propriétés d'insertion vis-à-vis des ions lithium. Une illustration de la courbe ainsi obtenue est donnée à la figure 23a:

Exemple 3 : fabrication d'un film d'anode

Le substrat est le même que dans l'exemple 2.

Le procédé de préparation de la suspension de particules SP- est similaire à celui de l'exemple 2 hormis que la suspension de particules de Li$_4$Ti$_5$O$_{12}$ a été diluée à 2g/l et que de l'acide citrique a été ajouté à la suspension à une concentration de 1.10-3 M. La suspension a été mise sous ultrason, et le surnageant a été récupéré après décantation.

Le dépôt des particules de particules SP- est effectué dans les mêmes conditions que dans l'exemple 2. Le dépôt est ensuite séché, puis consolidé sous 50 MPa.

Une courbe de voltampérométrie cyclique a été tracée à 0,1 V/sec. sur cette électrode afin de valider ses propriétés d'insertion vis-à-vis des ions lithium. La courbe est présentée à la figure 23b.

L'électrode ainsi obtenue est entièrement solide et adhère sur le substrat sans avoir à ajouter de liants, type PVDF, dans le dépôt.

Exemple 4 -fabrication d'un film de cathode

1- Préparation d'une suspension colloïdale de particules SP+

Des poudres nanométriques de $LiMn_{1,5}Ni_{0,4}Cr_{0,1}O_4$ ont été synthétisées à l'aide de la méthode décrite dans l'exemple 6a ci-dessous. Ces nanopoudres ont été broyées et dispersées dans de l'alcool afin d'obtenir une suspension à 20 g/l de $LiMn_{1,5}Ni_{0,4}Cr_{0,1}O_4$.

Le broyage dispersion a été conduit jusqu'à ce que la taille des particules en suspension atteigne 30 nm. Cette suspension a ensuite été diluée dans un solvant à base de cétone afin d'obtenir une suspension à 5 g/l. Les conditions de dépôt étaient de 70 mV/cm, ce qui a permis d'obtenir un dépôt d'environ 1 $\mu$m après seulement quelques secondes d'anaphorèse.

Exemple 5 -fabrication d'un film d'électrolytes

1- Préparation d'une suspension colloïdale de particules SPn

Des poudres nanométriques de $Li_{1,3}Al_{0,3}Ti_{1,7}(PO_4)_3$ ont été synthétisées de la même manière que dans l'exemple 1.

Les poudres nanométriques de $Li_{1,3}Al_{0,3}Ti_{1,7}(PO_4)_3$ ont été mises en suspension colloïdales dans l'alcool éthylique par broyage-dispersion. Aucun stabilisant n'a été ajouté à la suspension colloïdale, qui avait un extrait sec de 10 g/l. La suspension ainsi obtenue était parfaitement stable.

La distribution granulométrique des nanoparticules des suspensions colloïdales a été déterminée par DLS (dynamic light scattering - diffusion dynamique de la lumière) également appelée spectroscopie de corrélation de photons avec un appareil commercial Zetasizer de Malvern Instruments. Le principe de mesure est basé sur le mouvement brownien des particules en suspension. Cette technique de mesure quantifie la vitesse de diffusion des particules en solution, afin d'en déduire leur rayon hydrodynamique. Les mesures DLS présentées à la figure 24 illustrent la distribution de tailles de particules en suspension:

La taille moyenne des particules en suspension est de 60 nm. Comme précédemment, afin d'être certain de ne pas prélever d'agglomérats, nous travaillons quasi exclusivement avec les surnageants des suspensions après décantation.

Exemple 6 - Synthèse de nanoparticules utilisables comme matériaux d'anode, cathode ou électrolytes

a) $\underline{LiMn_{1,5}Ni_{0,4}Cr_{0,1}O_4}$

On dissout une poudre de $Li_2CO_3$ par petite quantité dans un mélange d'acide citrique et d'éthylène glycol chauffée à 70°C. On observe un dégagement de $CO_2$ à chaque portion additionnée. La température du mélange est portée à 90°C, puis on ajoute ensuite en quantité stoechiométrique du $Mn(NO_3)_2.4H_2O$, du $Ni(NO_3)_2.6H_2O$ et du $Cr(NO_3)_2.9H_2O$ à cette dernière solution puis on augmente la température du mélange à 140°C jusqu'à obtention d'une masse dure bullée. Cette dernière est ensuite passée à l'étuve à 250°C jusqu'à obtention d'une poudre. La poudre obtenue est enfin calcinée à 800°C pendant 6h. La poudre obtenue peut être utilisé pour préparer des films de cathode dans des batteries de type Li-ion.

b) $\underline{LiMnPO_4}$

On broie dans un mortier une poudre de $Li_3PO_4$ et une poudre $MnSO_4.4H_2O$ en quantité stoechiométrique. La poudre broyée obtenue est placée dans un autoclave à 190°C pendant 12h. Le produit obtenu est lavé, centrifugé puis séché à 40°C pendant une nuit. La poudre obtenue peut être utilisé pour préparer des films de cathode dans des batteries de type Li-ion.

c) LiFePO$_4$

On broie dans un mortier une poudre Li$_3$PO$_4$ et une poudre FeSO$_4$.7H$_2$O en quantité stoechiométrique. La poudre broyée obtenue est placée dans un autoclave à 190°C pendant 12h. Le produit obtenu est lavé, centrifugé puis séchée à 40°C pendant une nuit. La poudre obtenue peut être utilisé pour préparer des films de cathode dans des batteries de type Li-ion.

d) Li$_{2,9}$PO$_{3,3}$N$_{0,36}$/Li$_{2,9}$PO$_{3,3}$N$_{0,46}$(LIPON)

On place une poudre nanométrique de Li$_3$PO$_4$ non traitée thermiquement à haute température dans une nacelle en alumine placé dans un four tubulaire. La poudre est ensuite traitée thermiquement à 650°C pendant 2h sous atmosphère d'ammoniac. La poudre ainsi obtenue peut être utilisé pour préparer des films d'électrolyte dans des batteries de type Li-ion.

**Revendications**

**1.** Procédé de fabrication de batteries en couches minces entièrement solides, lesdites batteries comprenant une couche de matériaux d'anode (« couche d'anode »), une couche de matériaux d'électrolyte solide (« couche d'électrolyte ») et une couche de matériaux de cathode (« couche de cathode »), **caractérisé en ce que** :

- chacune de ces trois couches est déposée par un procédé d'électrophorèse,
- la couche d'anode et la couche de cathode sont déposée chacune sur un substrat conducteur, de préférence une feuille ou bande mince métallique ou une feuille ou bande ou film isolant métallisé, lesdits substrats conducteurs, ou leurs éléments conducteurs, pouvant servir comme collecteurs de courant de la batterie,
- la couche d'électrolyte est déposée sur la couche d'anode et/ou cathode,

et **caractérisé en ce que** ledit procédé comprend en outre au moins une étape d'empilage desdites feuilles ou bandes, de manière à former au moins une batterie de structure empilée « collecteur / anode / électrolyte / cathode / collecteur ».

**2.** Procédé selon la revendication 1, **caractérisé en ce qu'**il comprend en outre au moins une étape dite de densification pour augmenter la densité d'au moins une des couches déposées par électrophorèse, cette au moins une étape de densification pouvant être effectuée sur le substrat conducteur dotée d'au moins une couche d'anode ou d'au moins une couche de cathode, ladite au moins une couche d'anode ou de cathode pouvant éventuellement être revêtue d'au moins une couche d'électrolyte, et ladite au moins une étape de densification pouvant être effectuée avant empilage et/ou sur la structure empilée, ladite au moins une étape de densification comprenant une étape de compactage mécanique et/ou une étape de recuit à une température T$_R$ qui, de préférence, ne dépasse pas 0,7 fois la température de fusion ou de décomposition (exprimée en °C), et de préférence ne dépasse pas 0,5 fois (et encore plus préférentiellement ne dépasse pas 0,3 fois) la température de fusion ou de décomposition (exprimée en °C) du matériau d'anode, de cathode ou d'électrolyte le plus fusible soumis à ladite étape de recuit.

**3.** Procédé selon la revendication 2, **caractérisé en ce que** l'on effectue une étape de densification après l'étape d'empilage, ladite densification étant éventuellement réalisée sous vide ou sous atmosphère inerte.

**4.** Procédé de fabrication de batteries en couches minces entièrement solides selon l'une quelconque des revendications 1 à 3, comprenant les étapes de :

(a) Approvisionnement d'une première suspension colloïdale « *SP+* » contenant des particules « *P+* » dite de « matériaux de cathode » ;
(b) Approvisionnement d'une deuxième suspension colloïdale *« SP- »* contenant des particules *« P- »* dite de « matériaux d'anode » ;
(c) Approvisionnement d'une troisième suspension colloïdale *« SPn »* de particules *« Pn »* dite de « matériaux d'électrolyte solide » conductrice ;
(d) Approvisionnement de substrats conducteurs, de préférence sous la forme d'une bande ou d'une feuille ;
(e) Immersion d'un premier substrat conducteur dans un bain de ladite suspension SP+ contenant des particules P+ de matériaux de cathode en présence d'une contre-électrode, suivi de l'application d'une tension électrique entre ledit premier substrat conducteur et ladite contre-électrode de manière à obtenir un dépôt électrophorétique de particules P+ de matériaux de cathode sur ledit premier substrat de matériau conducteur ;

(f) Immersion d'un deuxième substrat conducteur dans un bain de ladite suspension SP- contenant des particules P- de matériaux d'anode en présence d'une contre-électrode, suivi de l'application d'une tension électrique entre ledit deuxième substrat et ladite contre-électrode de manière à obtenir un dépôt électrophorétique de particules P- de matériaux d'anode sur ledit substrat de matériau conducteur ;

(g) Immersion du premier substrat revêtu à l'étape (e) et/ou du deuxième substrat revêtu à l'étape (f) dans un bain de ladite suspension SPn de particules Pn de matériaux d'électrolyte solide en présence d'une contre-électrode, suivi de l'application d'une tension électrique entre ledit premier et/ou deuxième substrat revêtu et la contre-électrode de manière à obtenir un dépôt électrophorétique de particules de matériaux d'électrolyte solide inorganique sur ledit ou lesdits substrat(s) ;

(h) Empilement des substrats de cathode et d'anode pour obtenir une batterie comprenant éventuellement une étape de densification thermique, réalisée éventuellement sous vide ou sous atmosphère inerte, et éventuellement précédée ou accompagnée d'une étape de densification mécanique, de préférence isostatique ou par choc.

**5.** Procédé selon l'une quelconque des revendications 1 à 4 **caractérisé en ce que** les dépôts électrophorétiques des particules SP+ et/ou SP- et/ou SPn sont effectués par anaphorèse.

**6.** Procédé selon l'une quelconque des revendications 1 à 5, **caractérisé en ce que** les substrats conducteurs utilisés pour le dépôt des couches d'anode et de cathode sont en aluminium, obtenues de préférence par électro-polissage d'un feuillard d'aluminium, lesdits substrats ayant de préférence une épaisseur comprise entre 1 et 10 $\mu$m.

**7.** Procédé selon l'une quelconque des revendications 1 à 6, **caractérisé en ce que** la taille moyenne $D_{50}$ des particules de matériau d'anode, de cathode et/ou d'électrolyte solide est inférieure à 1 $\mu$m, de préférence inférieure à 100 nm et encore plus préférentiellement inférieure ou égale à 30 nm.

**8.** Procédé selon l'une quelconque des revendications 1 à 7 **caractérisé en ce que** le matériau d'anode est choisi parmi un ou plusieurs des matériaux suivants :

(i) les oxynitrures d'étain (de formule typique $SnO_xN_y$) ;

(ii) les oxynitrures mixtes de silicium et étain (de formule typique $Si_aSn_bO_yN_z$ avec a>0, b>0, a+b≤2, 0<y≤4, 0<z≤3) (appelés aussi SiTON), et en particulier le $SiSn_{0,87}O_{1,2}N_{1,72}$ ; ainsi que les oxynitrures sous la forme $Si_aSn_bC_cO_yN_z$ avec a>0, b>0, a+b≤2, 0<c-10, 0<y<24, 0<z<17; $Si_aSn_bC_cO_yN_zX_n$ et $Si_aSn_bO_yN_zX_n$ avec Xn au moins un des éléments parmi F, Cl, Br, I, S, Se, Te, P, As, Sb, Bi, Ge, Pb.

(iii) les nitrures de type $Si_xN_y$ (en particulier avec x=3 et y=4), $Sn_xN_y$ (en particulier avec x=3 et y=4), $Zn_xN_y$ (en particulier avec x=3 et y=4), $Li_{3-x}M_xN$ (avec M = Co, Ni, Cu) ;

(iv) les oxydes $SnO_2$, $Li_4Ti_5O_{12}$, $SnB_{0,6}P_{0,4}O_{2,9}$.

**9.** Procédé selon l'une quelconque des revendications 1 à 8 **caractérisé en ce que** le matériau de cathode est choisi parmi un ou plusieurs des matériaux Mx suivants :

- les oxydes $LiMn_2O_4$, $LiCoO_2$, $LiNiO_2$, $LiMn_{1,5}Ni_{0,5}O_4$, $LiMn_{1,5}Ni_{0,5-x}X_xO_4$ (où x est sélectionné parmi Al, Fe, Cr, Co, Rh, Nd, autres terres rares, et où 0 < x < 0,1), $LiFeO_2$, $LiMn_{1/3}Ni_{1/3}Co_{1/3}O_4$ ;

- les phosphates $LiFePO_4$, $LiMnPO_4$, $LiCoPO_4$, $LiNiPO_4$, $Li_3V_2(PO_4)_3$ ; toutes les formes lithiées des chalcogénides suivants : $V_2O_5$, $V_3O_8$, $TiS_2$, $TiO_yS_z$, $WO_yS_z$, $CuS$, $CuS_2$.

**10.** Procédé selon l'une quelconque des revendications 1 à 9 **caractérisé en ce que** le matériau d'électrolyte est choisi parmi un ou plusieurs des matériaux Mx suivants :

- les composés lithiés à base d'oxynitrure de lithium et de phosphore (appelés LiPON) sous forme $Li_xPO_yN_z$ avec x -2,8 et 2y+3z -7,8 et 0,16 ≤ z ≤ 0,4, et en particulier le $Li_{2,9}PO_{3,3}N_{0,46}$, mais également toutes les variantes sous forme $Li_wPO_xN_yS_z$ avec 2x+3y+2z = 5=w et 3,2 ≤ x ≤ 3,8, 0,13 ≤ y ≤ 0,4, 0 ≤ z ≤ 0,2, 2,9 ≤ w ≤ 3,3 ou sous forme $Li_tP_xAl_yO_uN_vS_w$ avec 5x+3y=5, 2u+3v+2w=5+t, 2,9≤t≤3,3, 0,94≤x≤0,84, 0,094≤y≤0,26, 3,2≤u≤3,8, 0,133≤v≤0,46, 0≤w≤0,2 ;

- les composé lithiés à base d'oxynitrure de lithium, de phosphore et de silicium (appelés LiSiPON), et en particulier le $Li_{1,9}Si_{0,28}P_{1,0}O_{1,1}N_{1,0}$ ;

- les oxynitrures de lithium de types LiBON, LiBSO, LiSiPON, LiSON, thio-LiSiCON, LiPONB (ou B, P et S représentent respectivement le bore, le phosphore et le soufre);
- les composés $La_{0,51}Li_{0,34}Ti_{2,94}$, $Li_{3,4}V_{0,4}Ge_{0,6}O_4$, $Li_2O-Nb_2O_5$, $LiAlGaSPO_4$ ;
- les formulations à base de $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (où M = Ge, Ti, et/ou Hf, et où 0 < x < 1), $Li_{1+x+y}Al_xTi_{2-x}Si_yP_{3-y}O_{12}$ (où 0≤x≤1 et 0≤y≤1), $Li_{1+x+z}M_x(Ge_{1-y}Ti_y)_{2-x}Si_zP_{3-z}O_{12}$ (où 0 ≤ x ≤0,8 ; 0 ≤ y ≤ 1,0 ; 0 ≤ z ≤ 0,6), et en particulier les formulations 4,9Lil-34,1Li_2O-61B_2O_3, 0,30Li_2S-0,26B_2S_3-0,44Lil, 60Li_2S-40SiS_2, 0,02Li_3PO_4-0,98(Li_2S-SiS_2), 2(Li_{1,4}Ti_2Si_{0,4}P_{2,6}O_{12})-AlPO_4, 0,7Li_2S-0,3P_2S_5.

**11.** Procédé selon l'une quelconque des revendications 1 à 10 **caractérisé en ce que** des nanoparticules conductrices électroniques et/ou conductrices des ions lithium sont déposées simultanément aux nanoparticules de matériaux d'électrode.

**12.** Procédé selon la revendication 11 **caractérisé en ce que** les nanoparticules conductrices sont constituées de matériaux céramiques ou vitrocéramiques choisis de préférence parmi les composés de type LIPON (et notamment le $Li_{2,9}PO_{3,3}N_{0,46}$), les composés de type LISIPON (et notamment le $Li_{1,9}Si_{0,28}P_{1,0}O_{1,1}N_{1,0}$), $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{1,3}Al_{0,3}Ti_{1,7}(PO_4)_3$, $Li_{0,35}La_{0,55}TiO_3$, $Li_{3,25}Ge_{0,25}P_{0,25}S_4$, $Li_{1+x}Al_xM_{2-x}(PO_4)_3$, avec M=Ge, Ti, Hf et 0<x<1, $Li_{1+x+y}Al_xTi_{2-x}Si_yP_{3-y}O_{12}$, $Li_{1+x+z}M_x(Ge_{1-y}Ti_y)_{2-x}Si_zP_{3-z}O_{12}$, (0=<x=<0,8 ; 0=<y=<1,0; 0=<z=<0,6) les mélanges de poudres 4,9Lil-34,1Li_2O-61B_2O_3, 30Li_2S-26B_2S_3-44Lil, 60Li_2S-40SiS_2, 2Li_3PO_4-98(Li_2S-SiS_2), $(Li_{1,4}Ti_2Si_{0,4}P_{2,6}O_{12})$ / AlPO_4 (en rapport 2 :1), 70Li_2S-30P_2S_5, LiBO_2, LiBON, LiBSO, LiSiPON, LiSON, thio,LiSi-CON, $La_{0,5}1Li_{0,34}TiO_{2,94}$, $Li_{3,4}V_{0,4}Ge_{0,6}O_4$, $Li_2O-Nb_2O_5$, LiPONB, $LiAlGaSPO_4$..

**13.** Procédé selon l'une quelconque des revendications 1 à 12 **caractérisé en ce que** l'une au moins des suspensions *SP+, SP-* et *SPn* ne contient pas de stabilisant.

**14.** Batterie en couches minces entièrement solides susceptible d'être fabriquée par le procédé selon l'une quelconque des revendications 1 à 13, ladite batterie présentant une densité énergétique supérieure à 250 Wh/kg et/ou supérieure à 500 Wh/litre.

**15.** Batterie selon la revendication 14, **caractérisée en ce qu'**elle comporte en outre au moins une couche de revêtement contenant des éléments métalliques, ou terminaison (81,82,83), déposée sur les tranches des électrodes, et un film isolant protecteur (80) recouvrant les autres faces de la batterie, de manière à ce que le(s)dit(s) film isolant protecteur (80) et ladite au moins une couche de revêtement métallique (81,82,83) forment une protection hermétique de la batterie contre l'air ambiant.

**Patentansprüche**

**1.** Verfahren zur Herstellung von reinen Festkörper-Dünnschichtbatterien, wobei die Batterien eine Anodenmaterialschicht ("Anodenschicht"), eine Festkörperelektrolytmaterialschicht (,Elektrolytschicht") und eine Kathodenmaterialschicht ("Kathodenschicht") umfassen, **dadurch gekennzeichnet, dass**:

- jede dieser drei Schichten durch ein Elektrophoreseverfahren abgeschieden wird,
- die Anodenschicht und die Kathodenschicht jede auf einem leitenden Substrat, vorzugsweise einem dünnen Metallbogen oder -band oder einem isolierenden, metallisierten Bogen oder Band oder Film abgeschieden werden, wobei die leitenden Substrate oder ihre leitenden Elemente als Stromkollektoren der Batterie dienen können,
- die Elektrolytschicht auf die Anoden- und/oder Kathodenschicht abgeschieden wird,

und **dadurch gekennzeichnet, dass** das Verfahren weiter wenigstens einen Schritt des Stapelns der Bögen oder Bänder umfasst, um wenigstens eine Batterie mit gestapelter Struktur "Kollektor / Anode / Elektrolyt / Kathode / Kollektor" zu bilden.

**2.** Verfahren nach Anspruch 1, **dadurch gekennzeichnet, dass** es weiter wenigstens einen so genannten Verdichtungsschritt umfasst, um die Dichte von wenigstens einer der Schichten, die durch Elektrophorese abgeschieden wurden, zu erhöhen,

wobei dieser wenigstens eine Verdichtungsschritt auf dem leitenden Substrat vorgenommen werden kann, das mit wenigstens einer Anodenschicht oder wenigstens einer Kathodenschicht versehen ist,

wobei die wenigstens eine Anoden- oder Kathodenschicht gegebenenfalls mit wenigstens einer Elektrolytschicht beschichtet sein kann,

und wobei der wenigstens eine Verdichtungsschritt vor dem Stapeln und/oder an der gestapelten Struktur vorgenommen werden kann,

wobei der wenigstens eine Verdichtungsschritt einen Schritt der mechanischen Kompaktierung und/oder einen Schritt des Glühens bei einer Temperatur $T_R$ umfasst, die vorzugsweise das 0,7-fache der Schmelz- oder Zersetzungstemperatur (ausgedrückt in °C) nicht übersteigt, und vorzugsweise das 0,5-fache der Schmelz-oder Zersetzungstemperatur (ausgedrückt in °C) des am leichtesten schmelzenden Anoden-, Kathoden- oder Elektrolytmaterials, das dem Schritt des Glühens unterzogen wird, nicht übersteigt (und noch stärker bevorzugt das 0,3-fache nicht übersteigt).

3. Verfahren nach Anspruch 2, **dadurch gekennzeichnet, dass** ein Verdichtungsschritt nach dem Schritt des Stapels vorgenommen wird, wobei das Verdichten gegebenenfalls unter Vakuum oder unter inerter Atmosphäre ausgeführt wird.

4. Verfahren zur Herstellung von reinen Festkörper-Dünnschichtbatterien nach einem der Ansprüche 1 bis 3, umfassend die Schritte des:

(a) Beschaffens einer ersten kolloidalen "*SP*+" Suspension, "Kathodenmaterial" genannt, die "*P*+" Teilchen enthält;

(b) Beschaffens einer zweiten kolloidalen "*SP*-" Suspension, "Anodenmaterial" genannt, die "*P*-" Teilchen enthält;

(c) Beschaffens einer dritten kolloidalen "*SPn*" Suspension von "*Pn*" Teilchen, leitendes "Festkörperelektrolytmaterial" genannt;

(d) Beschaffens von leitenden Substraten, vorzugsweise in der Form eines Bandes oder eines Bogens;

(e) Eintauchens, in Gegenwart einer Gegenelektrode, eines ersten leitenden Substrats in ein Bad der *SP*+ Suspension, die P+ Kathodenmaterialteilchen enthält, gefolgt vom Anlegen einer elektrischen Spannung zwischen dem ersten leitenden Substrat und der Gegenelektrode, um eine elektrophoretische Abscheidung von *P*+ Kathodenmaterialteilchen auf dem ersten leitenden Materialsubstrat zu erhalten;

(f) Eintauchens, in Gegenwart einer Gegenelektrode, eines zweiten leitenden Substrats in ein Bad der SP- Suspension, die P- Anodenmaterialteilchen enthält, gefolgt vom Anlegen einer elektrischen Spannung zwischen dem zweiten Substrat und der Gegenelektrode, um eine elektrophoretische Abscheidung von *P*-Anodenmaterialteilchen auf dem leitenden Materialsubstrat zu erhalten;

(g) Eintauchens, in Gegenwart einer Gegenelektrode, des im Schritt (e) beschichteten ersten Substrats und/oder des im Schritt (f) beschichteten zweiten Substrats in ein Bad der *SPn* Suspension von *Pn* Festkörperelektrolytmaterialteilchen, gefolgt vom Anlegen einer elektrischen Spannung zwischen dem ersten und/oder zweiten beschichteten Substrat und der Gegenelektrode, um eine elektrophoretische Abscheidung von anorganischen Festkörperelektrolytmaterialteilchen auf dem oder den Substrat(en) zu erhalten;

(h) Stapelns der Kathoden- und Anodensubstrate, um eine Batterie zu erhalten, gegebenenfalls einen Schritt der thermischen Verdichtung umfassend, der gegebenenfalls unter Vakuum oder unter inerter Atmosphäre ausgeführt wird, und gegebenenfalls vorausgegangen oder begleitet von einem Schritt der mechanischen, vorzugsweise isostatischen oder Stoßverdichtung.

5. Verfahren nach einem der Ansprüche 1 bis 4, **dadurch gekennzeichnet, dass** die elektrophoretischen Abscheidungen der SP+ und/oder SP- und/oder SPn Teilchen durch Anaphorese vorgenommen werden.

6. Verfahren nach einem der Ansprüche 1 bis 5, **dadurch gekennzeichnet, dass** die leitenden Substrate, die für die Abscheidung der Anoden- und Kathodenschichten verwendet werden, aus Aluminium sind, vorzugsweise durch Elektropolieren eines Aluminiumstreifens erhalten, wobei die Substrate vorzugsweise eine Dicke im Bereich zwischen 1 und 10 $\mu$m besitzen.

7. Verfahren nach einem der Ansprüche 1 bis 6, **dadurch gekennzeichnet, dass** die mittlere Größe $D_{50}$ der Anoden-, Kathoden- und/oder Festkörperelektrolytmaterialteilchen kleiner als 1 $\mu$m, vorzugsweise kleiner als 100 nm und noch stärker bevorzugt kleiner oder gleich 30 nm ist.

8. Verfahren nach einem der Ansprüche 1 bis 7, **dadurch gekennzeichnet, dass** das Anodenmaterial aus einem oder mehreren der folgenden Materialien ausgewählt ist:

(i) Zinn-Oxynitriden (der typischen Formel $SnO_xN_y$);
(ii) gemischten Silizium- und Zinn-Oxynitriden (der typischen Formel $Si_aSn_bO_yN_z$, wobei a > 0, b > 0, a + b ≤ 2, 0 < y ≤ 4, 0 < z ≤ 3) (auch SiTON genannt), und insbesondere $SiSn_{0,87}O_{1,2}N_{1,72}$; sowie Oxynitriden in der Form $Si_aSn_bC_cO_yN_z$, wobei a > 0, b > 0, a + b ≤ 2, 0 < c - 10, 0 < y < 24, 0 < z < 17; $Si_aSn_bC_cO_yN_zX_n$ und $Si_aSn_bO_yN_zX_n$, wobei Xn wenigstens eines der Elemente ist aus F, Cl, Br, I, S, Se, Te, P, As, Sb, Bi, Ge, Pb;
(iii) Nitriden vom Typ $Si_xN_y$ (insbesondere wobei x = 3 und y = 4), $Sn_xN_y$ (insbesondere wobei x = 3 und y = 4), $Zn_xN_y$ (insbesondere wobei x = 3 und y = 4), $Li_{3-x}M_xN$ (wobei M = Co, Ni, Cu);
(iv) $SnO_2$-, $Li_4Ti_5O_{12}$-, $SnB_{0,6}P_{0,4}O_{2,9}$-Oxiden.

9. Verfahren nach einem der Ansprüche 1 bis 8, **dadurch gekennzeichnet, dass** das Kathodenmaterial aus einem oder mehreren der folgenden Mx-Materialien ausgewählt ist:

- $LiMn_2O_4$-, $LiCoO_2$-, $LiNiO_2$-, $LiMn_{1,5}Ni_{0,5}O_4$-, $LiMn_{1,5}Ni_{0,5-x}X_xO_4$- (wobei x aus Al, Fe, Cr, Co, Rh, Nd, anderen seltenen Erden ausgewählt ist und wobei 0 < x < 0,1), $LiFeO_2$-, $LiMn_{1/3}Ni_{1/3}Co_{1/3}O_4$-Oxiden;
- $LiFePO_4$-, $LiMnPO_4$-, $LiCoPO_4$-, $LiNiPO_4$-, $Li_3V_2(PO_4)_3$-Phosphaten;
- allen lithiierten Formen der folgenden Chalkogenide: $V_2O_5$, $V_3O_8$, $TiS_2$, $TiO_yS_z$, $WO_yS_z$, $CuS$, $CuS_2$.

10. Verfahren nach einem der Ansprüche 1 bis 9, **dadurch gekennzeichnet, dass** das Elektrolytmaterial aus einem oder mehreren der folgenden Mx-Materialien ausgewählt ist:

- lithiierten Verbindungen auf Basis von Lithium- und Phosphor-Oxynitrid (LiPON genannt) in der Form $Li_xPO_yN_z$, wobei x ~2,8 und 2y + 3z ~7,8 und 0,16 ≤ z ≤ 0,4, und insbesondere $Li_{2,9}PO_{3,3}N_{0,46}$, aber ebenfalls allen Varianten in der Form $Li_wPO_xN_yS_z$, wobei 2x + 3y + 2z = 5 = w und 3,2 ≤ x ≤ 3,8, 0,13 ≤ y ≤ 0,4, 0 ≤ z ≤ 0,2, 2,9 ≤ w ≤ 3,3, oder in der Form $Li_tP_xAl_yO_uN_vS_w$, wobei 5x + 3y = 5, 2u + 3v + 2w = 5 + t, 2,9 ≤ t ≤ 3,3, 0, 94 ≤ x ≤ 0,84, 0,094 ≤ y ≤ 0,26, 3,2 ≤ u ≤ 3,8, 0,13 ≤ v ≤ 0,46, 0 ≤ w ≤ 0,2;
- lithiierten Verbindungen auf Basis von Lithium-, Phosphor- und Silizium-Oxynitrid (LiSiPON genannt), und insbesondere $Li_{1,9}Si_{0,28}P_{1,0}O_{1,1}N_{1,0}$;
- Lithium-Oxynitriden vom Typ LiBON, LiBSO, LiSiPON, LiSON, Thio-LiSiCON, LiPONB (wobei B, P und S jeweils für Bor, Phosphor und Schwefel stehen);
- $La_{0,51}Li_{0,34}Ti_{2,94}$-, $Li_{3,4}V_{0,4}Ge_{0,6}O_4$-, $Li_2O-Nb_2O_5$-, $LiAlGaSPO_4$-Verbindungen;
- Formulierungen auf Basis von $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (wobei M = Ge, Ti, und/oder Hf, und wobei 0 < x < 1), $Li_{1+x+y}Al_xTi_{2-x}Si_yP_{3-y}O_{12}$ (wobei 0 ≤ x ≤ 1 und 0 ≤ y ≤ 1), $Li_{1+x+z}M_x(Ge_{1-y}Ti_y)_{2-x}Si_zP_{3-z}O_{12}$ (wobei 0 ≤ x ≤ 0,8; 0 ≤ y ≤ 1,0; 0 ≤ z ≤ 0,6) und insbesondere den Formulierungen 4,9Lil-34,1$Li_2O$-61$B_2O_3$, 0,30$Li_2S$-0, 26$B_2S_3$-0,44Lil, 60$Li_2S$-40$SiS_2$, 0,02$Li_3PO_4$-0,98($Li_2S$-$SiS_2$), 2($Li_{1,4}Ti_2Si_{0,4}P_{2,6}O_{12}$)-$AlPO_4$, 0,7$Li_2S$-0,3$P_2S_5$.

11. Verfahren nach einem der Ansprüche 1 bis 10, **dadurch gekennzeichnet, dass** elektronenleitende und/oder lithiumionenleitende Nanopartikel gleichzeitig mit den Elektrodenmaterialnanopartikel abgeschieden werden.

12. Verfahren nach Anspruch 11, **dadurch gekennzeichnet, dass** die leitenden Nanopartikel aus Keramik- oder Glaskeramikmaterialien bestehen, die vorzugsweise ausgewählt sind aus Verbindungen vom Typ LIPON (und insbesondere $Li_{2,9}PO_{3,3}N_{0,46}$), Verbindungen vom Typ LISIPON (und insbesondere $Li_{1,9}Si_{0,28}P_{1,0}O_{1,1}N_{1,0}$), $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{1,3}Al_{0,3}Ti_{1,7}(PO_4)_3$, $Li_{0,35}La_{0,55}TiO_3$, $Li_{3,25}Ge_{0,25}P_{0,25}S_4$, $Li_{1+x}Al_xM_{2-x}(PO_4)_3$, wobei M = Ge, Ti, Hf und 0 < x < 1, $Li_{1+x+y}Al_xTi_{2-x}Si_yP_{3-y}O_{12}$, $Li_{1+x+z}M_x(Ge_{1-y}Ti_y)_{2-x}Si_zP_{3-z}O_{12}$, (0 ≤ x ≤ 0,8; 0 ≤ y ≤ 1,0; 0 ≤ z ≤ 0,6), Pulvergemischen 4,9Lil-34,1$Li_2O$-61$B_2O_3$, 30$Li_2S$-26$B_2S_3$-44Lil, 60$Li_2S$-40$SiS_2$, 2$Li_3PO_4$-98($Li_2S$-$SiS_2$), $Li_{1,4}Ti_2Si_{0,4}P_{2,6}O_{12}$) / $AlPO_4$ (im Verhältnis (2 : 1), 70$Li_2S$-30$P_2S_5$, $LiBO_2$, LiBON, LiBSO, LiSiPON, LiSON, Thio-LiSiCON, $La_{0,5}1Li_{0,34}TiO_{2,94}$, $Li_{3,4}V_{0,4}Ge_{0,6}O_4$, $Li_2O-Nb_2O_5$, LiPONB, $LiAlGaSPO_4$.

13. Verfahren nach einem der Ansprüche 1 bis 12, **dadurch gekennzeichnet, dass** wenigstens eine der Suspensionen *SP+*, *SP-* und *SPn* keinen Stabilisator enthält.

14. Batterie aus reinen Festkörper-Dünnschichten, die geeignet ist, durch das Verfahren nach einem der Ansprüche 1 bis 13 hergestellt zu werden, wobei die Batterie eine Energiedichte oberhalb von 250 Wh/kg und/oder oberhalb von 500 Wh/Liter aufweist.

15. Batterie nach Anspruch 14, **dadurch gekennzeichnet, dass** sie weiter wenigstens eine Beschichtungsschicht umfasst, die Metallelemente enthält, oder Anschlüsse (81, 82, 83), die auf den Elektrodenabschnitten abgeschieden sind, und einen schützenden Isolierfilm (80), der die anderen Flächen der Batterie bedeckt, sodass der (die) schützende Isolierfilm (80) und die wenigstens eine metallische Beschichtungsschicht (81, 82, 83) einen hermetischen Schutz der Batterie gegenüber der Umgebungsluft bilden.

**Claims**

1. Process for fabrication of all-solid-state thin film batteries, said batteries comprising a film of anode materials (anode film), a film of solid electrolyte materials (electrolyte film) and a film of cathode materials (cathode film), **characterized in that**:

   - each of these three films is deposited using an electrophoresis process,
   - the anode film and the cathode film are each deposited on a conducting substrate, preferably a thin metal sheet or band, or a metalized insulating sheet or band or film, said conducting substrates, or their conducting elements, capable of acting as battery current collectors,
   - the electrolyte film is deposited on the anode and/or cathode film,

   and **characterized in that** said process also comprises at least one step in which said sheets or bands are stacked so as to form at least one battery with a "collector / anode / electrolyte / cathode / collector" type of stacked structure.

2. Process according to claim 1, **characterized in that** it also comprises at least one so-called consolidation step aimed at increasing the density of at least one of the films deposited by electrophoresis,
   this at least one consolidation step possibly being done on the conducting substrate with at least one anode film or at least one cathode film,
   said at least one anode or cathode film possibly being coated with at least one electrolyte film,
   and said at least one consolidation step possibly being done before stacking and/or on the stacked structure,
   said at least one consolidation step comprising a mechanical compaction step and/or an annealing step at a temperature $T_R$ that preferably does not exceed 0.7 times the melting or decomposition temperature (expressed in °C) and preferably does not exceed 0.5 times (and even more preferably does not exceed 0.3 times) the melting or decomposition temperature (expressed in °C) of the anode, cathode or electrolyte material with the lowest melting temperature on which said annealing step is carried out.

3. Process according to claim 2, **characterized in that** a consolidation step is done after the stacking step, said consolidation possibly being done under a vacuum or under an inert atmosphere.

4. Process for fabrication of all-solid-state thin film batteries according to any one of claims 1 to 3, comprising the steps of:

   (a) Providing a first colloidal suspension "$SP+$" containing "$P+$" particles, called a "cathode materials" suspension;
   (b) Providing a second colloidal suspension "$SP-$" containing "$P-$" particles, called an "anode materials" suspension;
   (c) Providing a third colloidal suspension "$SPn$" containing "$Pn$" particles, called a conducting "solid electrolyte materials" suspension;
   (d) Providing conducting substrates, preferably in the form of a band or sheet;
   (e) Immersing a first conducting substrate in a bath of said $SP+$ suspension containing $P+$ particles of cathode materials in the presence of a counter-electrode, followed by application of an electrical voltage between said first conducting substrate and said counter electrode so as to obtain an electrophoretic deposit containing $P+$ particles of cathode materials on said first substrate of conducting material;
   (f) Immersing a second conducting substrate in a bath of said $SP-$ suspension containing $P-$ particles of anode materials in the presence of a counter electrode, followed by application of an electric voltage between said second substrate and said counter electrode so as to obtain an electrophoretic deposit containing P- particles of anode materials on said substrate of conducting material;
   (g) Immersing the first substrate coated in step (e) and/or the second substrate coated in step (f) in a bath of said $SPn$ suspension of $Pn$ particles of solid electrolyte materials in the presence of a counter electrode, followed by application of an electric voltage between said first and/or second coated substrate and the counter electrode so as to obtain an electrophoretic deposit of inorganic solid electrolyte material particles on said substrate(s);
   (h) Stacking the cathode and anode substrates to obtain a battery, possibly including a thermal consolidation step, possibly done under a vacuum or under an inert atmosphere and possibly preceded by or accompanied by a mechanical consolidation step, preferable isostatic or by impact.

5. Process according to any one of claims 1 to 4 **characterized in that** the electrophoretic deposits of SP+ and/or SP- and/or SPn particles are made by anaphoresis.

6. Process according to any one of claims 1 to 5, **characterized in that** the conducting substrates used for deposition of the anode and cathode films are made of aluminum, preferably obtained by electropolishing of an aluminum sheet, and that the thickness of said substrates is preferably between 1 and 10 $\mu$m.

7. Process according to any one of claims 1 to 6, **characterized in that** the average size $D_{50}$ of particles in the anode, cathode and/or solid electrolyte material is preferably less than 1 $\mu$m, more preferably less than 100 nm, and even more preferably less than 50 nm and even better less than 30 nm.

8. Process according to any one of claims 1 to 7 **characterized in that** the anode material is chosen from among one or several of the following materials:

> (i) tin oxinitrides (typical formula $SnO_xN_y$)tin oxinitrides (typical formula $SnO_xN_y$);
> (ii) mixed silicon and tin oxinitrides (typical formula $Si_aSn_bO_yN_z$ where a>0, b>0, a+b≤2, 0<y≤4. 0<z≤3) (also called SiTON), and particularly $SiSn_{0,87}O_{1,2}N_{1,72}$; and oxinitrides in the form $Si_aSn_bC_cO_yN_z$ where a>0, b>0, a+b≤2, 0<c-10, 0<y<24. 0<z<17; $Si_aSn_bC_cO_yN_zX_n$ and $Si_aSn_bO_yN_zX_n$ where Xn is at least one of the elements F, Cl, Br, I, S, Se, Te, P, As, Sb, Bi, Ge, Pb;
> (iii) $Si_xN_y$ type nitrides (particularly in which x=3 and y=4), $Sn_xN_y$ (particularly in which x=3 and y=4), $Zn_xN_y$ (particularly in which x=3 and y=4), $Li_{3-x}M_xN$ (where M = Co, Ni, Cu) ;
> (iv) $SnO_2$, $Li_4Ti_5O_{12}$, $SnB_{0,6}P_{0,4}O_{2,9}$. oxides.

9. Process according to any one of claims 1 to 8 **characterized in that** the cathode material is chosen from among one or several of the following Mx materials:

> - $LiMn_2O_4$, $LiCoO_2$, $LiNiO_2$, $LiMn_{1,5}Ni_{0,5}O_4$, $LiMn_{1,5}Ni_{0,5-x}X_xO_4$ oxides (where x is selected from among Al, Fe, Cr, Co, Rh, Nd, other rare earths and in which 0 < x < 0.1), $LiFeO_2$, $LiMn_{1/3}Ni_{1/3}Co_{1/3}O_4$;
> - $LiFePO_4$, $LiMnPO_4$, $LiCoPO_4$, $LiNiPO_4$, $Li_3V_2(PO_4)_3$ phosphates;
> - all lithiated forms of the following chalcogenides: $V_2O_5$, $V_3O_8$, $TiS_2$, $TiO_yS_z$, $WO_yS_z$, $CuS$, $CuS_2$.

10. Process according to any one of claims 1 to 9 **characterized in that** the electrolyte material is chosen from among one or several of the following Mx materials:

> - lithium compounds based on lithium oxinitride and phosphorus (called LiPON) in the form $Li_xPO_yN_z$ where x ~2.8 and 2y+3z ~7.8 and 0.16 ≤ 0.4, and in particular $Li_{2,9}PO_{3,3}N_{0,46}$, but also all variants in the form $Li_wPO_xN_yS_z$ where 2x+3y+2z = 5=w and 3.2 ≤ x ≤ 3.8, 0.13 ≤ y ≤ 0.4, 0 ≤ z ≤ 0.2, 2.9 ≤ w ≤ 3.3 or in the form $Li_tP_xAl_yO_uN_vS_w$ where 5x+3y=5, 2u+3v+2w=5+t, 2,9≤t≤3,3, 0.94≤x≤0.84, 0.094≤y≤0.26, 3.2≤u≤3.8, 0.13≤v≤0.46, 0≤w≤0.2;
> - lithium compounds based on lithium oxinitride, phosphorus and silicon (called LiSiPON), and particularly $Li_{1,9}Si_{0,28}P_{1,0}O_{1,1}N_{1,0}$;
> - lithium oxinitrides of the LiBON, LiBSO, LiSiPON, LiSON, thio-LiSiCON, LiPONB types (where B, P and S represent boron, phosphorus and sulfur respectively);
> - compounds $La_{0,51}Li_{0,34}Ti_{2,94}$, $Li_{3,4}V_{0,4}Ge_{0,6}O_4$, $Li_2O-Nb_2O_5$, $LiAlGaSPO_4$;
> - formulations based on $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (where M = Ge, Ti, and/or Hf, and where 0 < x < 1), $Li_{1+x+y}Al_xTi_{2-x}Si_yP_{3-y}O_{12}$ (where 0≤x≤1and 0≤y≤1), $Li_{1+x+z}M_x(Ge_{1-y}Ti_y)_{2-x}Si_zP_{3-z}O_{12}$ (where 0 ≤ x ≤0.8; 0 ≤ y ≤ 1.0; 0 ≤ z ≤ 0.6), and in particular formulations 4.9LiI-34,1$Li_2O$-61$B_2O_3$, 0,30$Li_2S$-0.26$B_2S_3$-0.44LiI, 60$Li_2S$-40$SiS_2$, 0.02$Li_3PO_4$-0.98($Li_2S$-$SiS_2$), 2($Li_{1,4}Ti_2Si_{0,4}P_{2,6}O_{12}$)-$AlPO_4$, 0.7$Li_2S$-0.3$P_2S_5$.

11. Process according to any one of claims 1 to 10 **characterized in that** electron conducting and/or lithium ion conducting nanoparticles are deposited at the same time as electrode material nanoparticles.

12. Process according to claim 11 **characterized in that** conducting nanoparticles are composed of ceramic or vitroceramic materials preferably chosen from among LIPON type compounds (and particularly $Li_{2,9}PO_{3,3}N_{0,46}$), LISIPON type compounds (and particularly $Li_{1.9}Si_{0.28}P_{1.0}O_{1.1}N_{1.0}$), $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3.6}Ge_{0.6}V_{0.4}O_4$, $LiTi_2(PO_4)_3$, $Li_{1.3}Al_{0.3}Ti_{1.7}(PO_4)_3$, $Li_{0.35}La_{0.55}TiO_3$, $Li_{3.25}Ge_{0.25}P_{0.25}S_4$, $Li_{1+x}Al_xM_{2-x}(PO_4)_3$, with M=Ge, Ti, Hf and 0<x<1, $Li_{1+x+y}Al_xTi_{2-x}Si_yP_{3-y}O_{12}$, $Li_{1+x+z}M_x(Ge_{1-y}Ti_y)_{2-x}Si_zP_{3-z}O_{12}$, (0=<x=<0,8; 0=<y=<1,0; 0=<z=<0,6) powder mixtures 4,9LiI-34,1$Li_2O$-61$B_2O_3$, 30$Li_2S$-26$B_2S_3$-44LiI, 60$Li_2S$-40$SiS_2$, 2$Li_3PO_4$-98($Li_2S$-$SiS_2$), ($Li_{1.4}Ti_2Si_{0.4}P_{2.6}O_{12}$) / $AlPO_4$ (in ratio 2:1), 70$Li_2S$-30$P_2S_5$, $LiBO_2$, LiBON, LiBSO, LiSiPON, LiSON, thio-LiSiCON, $La_{0.5}1Li_{0.34}TiO_{2.94}$, $Li_{3.4}V_{0.4}Ge_{0.6}O_4$, $Li_2O$-$Nb_2O_5$, LiPONB, $LiAlGaSPO_4$..

13. Process according to any one of claims 1 to 12 **characterized in that** at least one of the *SP+, SP-* and *SPn* suspensions does not contain any stabilizer.

14. All-solid-state thin film battery that can be made using the process according to any one of claims 1 to 13, said battery having an energy density greater than 250 Wh/kg and/or greater than 500 Wh/liter.

15. Battery according to claim 14, **characterized in that** it also comprises at least one coating film containing metal elements, namely a termination film (81, 82, 83), deposited on the edges of the electrodes, and an insulating protective film (80) covering the other faces of the battery, such that said insulating protective film(s) (80) and said at least metal coating film (81, 82, 83) form a hermetically sealed protection of the battery against ambient air.

Figure 1 (a)

Figure 1 (b)

Figure 1 (c)

Figure 1 (d)

Figure 1 (e)

Figure 2

Figure 3(a)

Figure 3(b)

Figure 3(c)

Figure 3(d)

Figure 4

Figure 5a

Figure 5a'

Figure 5b

Figure 5b'

Figure 5c

Figure 5c'

Figure 6a

Figure 6a'

Figure 6b

Figure 6b'

Figure 6c

Figure 6c'

Figure 7a

Figures 7 a'

Figure 7b

Figure 7b'

Figure 7c

Figure 7c'

Figure 8

Figure 9

Figure 10

Figure 11

Plan de
coupe A

Plan de
coupe B

Plan de
coupe A

Plan de
coupe B

73

71

72

Figure 12

Figure 13

Figure 14a

Figure 14b

Figure 14c

Figure 14d

60

Figure 15a

64a

Figure 15b

64a

63

62

61b

Figure 15c

64a

63

62

64b

Figure 15d

63

62

63

Figure 15e

63

62

63

Figure 15f

Figure 16a

Figure 16b

Figure 16c

Figure 16d

| Réaliser une suspension colloïdale des matériaux à déposer |
| --- |

↓

| Mettre en contact la surface à revêtir et la suspension colloïdale |
| --- |

↓

| Appliquer un champ électrique entre la surface à revêtir et une contre-électrode également située dans la suspension colloïdale le temps nécessaire pour obtenir la quantité déposée souhaitée |
| --- |

↓

| Sécher le revêtement |
| --- |

↓

| Fritter et/ou compacter le revêtement |
| --- |

Figure 17

Figure 18a

Figure 18b

Figure 19

Figure 20

**Fabrication de la cathode**        **Fabrication de l'anode**

1.A — Dépôt des particules « P+ » par électrophorèse — 1.B

2.A — Séchage des dépôts — 2.B

3.A — Densification des dépôts — 3.B

4.A — Dépôt des particules « Pn » par électrophorèse — 4.B

5.A — Séchage des dépôts — 5.B

6.A — Découpe sur 1 coté des électrodes revêtues — 6.B

7 — Empilement

8 — Densification de la jonction électrolytique

Figure 22

76

77

Figure 21a

78

Figure 21 b

79

Figure 21c

EP 2 774 196 B1

Densité relative

1

0,92

Elimination de la
porosité fermée

Elimination de la porosité ouverte

0,65

Formation des ponts entre grains

0,55

Temps

Figure 21d

Figure 23a

Figure 23b

Figure 24

Figure 25

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004051769 A
- EP 1049188 A1, Ohara KK
- EP 1424743 A1, Ohara KK
- US 7662265 B
- US 6887361 B
- US 2007184345 A
- WO 2007061928 A
- US 2008286651 A
- WO 2010011569 A
- US 7790967 B
- JP 4501247 B, DENSO
- JP 2002042792 A, DENSO

**Littérature non-brevet citée dans la description**

- Advances in Lithium-Ion Batteries. Kluever Academic / Plenum Publishers, 2002
- **JOHN NEWMAN.** Optimization of Porosity and Thickness of a Battery Electrode by Means of a Re-action-Zone Model. *J. Electrochem. Soc.,* Janvier 1995, vol. 142 (1
- **W. LIU ; G.C. FARRINGTON ; F. CHAPUT ; B. DUNN.** Synthesis and Electrochemical Studies of Spinel Phase LiMn2O4 Cathode Materials Prepared by the Pechini. *J. Electrochem. Soc.,* 1996, vol. 143 (3
- **M. KALBAC et al.** Phase-pure nanocrystalline Li4Ti5O12 for a lithium-ion battery. *J Solid State Ele-crtochem,* 2003, vol. 8, 2-6
- **XIAO et al.** Thin-film lithium-ion battery derived from Li1,3Al0,3Ti1,7(PO4)3 sintered pellets. *Trans. Non-ferrous Me. Soc. China,* 2006, vol. 16, 281-285